# EUROPEAN PATENT APPLICATION

(11) **EP 4 371 711 A1**
(43) Date of publication of application: **22.05.2024**
(21) Application number: 23210227.7
(22) Date of filing: 15.11.2023
(51) Int. Cl.: B25J 9/00, B25J 19/06, B25J 21/00, B25J 9/08

(54) **A ROBOTIC SYSTEM TRANSFER UNIT CELL AND METHOD OF OPERATION THEREOF**

(30) Priority: 16.11.2022 US 202263426010 P; 12.10.2023 US 202363589735 P
(71) Applicant: Mujin, Inc., Tokyo 1350053 (JP)
(72) Inventor: Coats, Brandon, Tokyo, 135-0053 (JP); Lei, Lei, Tokyo, 135-0053 (JP); Chen, Zhengjia, Tokyo, 135-0053 (JP); Xu, Yi, Tokyo, 135-0053 (JP); Gao, Lingping, Tokyo, 135-0053 (JP); Huang, Guohao, Tokyo, 135-0053 (JP)
(74) Representative: Beck Greener LLP

(57) **Abstract**

A robotic system and method of rapid deployment is provided. The robotic system may include a control system, and a transfer unit cell in communication with the control system for facilitating transfer of objects from a source to a destination. The transfer unit cell may translate between a deployed configuration configured to receive and interact with objects, a retracted configuration where the transfer unit cell is retracted into itself, and a transport configuration for moving the transfer unit cell via a transport unit. The transfer unit cell may include a cell base plate, a robotic arm mount for supporting a robot, a conveyor system for receiving or providing at least one target object, a sensor mount for receiving a sensor system, and a unit enclosure mounted to the cell base plate of the transfer unit cell to facilitate transport of the transfer unit cell and translation between positions.

## Description

The present application claims the benefit of U.S. Provisional Appl. No. 63/426,010, entitled "ROBOTIC SYSTEM AND METHOD OF OPERATION THEREOF" and filed November 16, 2022, and U.S. Provisional Appl. No. 63/589,735, entitled "ROBOTIC SYSTEM AND METHOD OF OPERATION THEREOF" and filed October 12, 2023, the entire contents of which are incorporated by reference herein.

The present technology is directed generally to robotic systems and, more specifically, to systems, processes, and techniques for operation and deployment thereof.

With their ever-increasing performance and lowering cost, many robots (e.g., machines configured to automatically/autonomously execute physical actions) are now extensively used in various different fields. Robots, for example, can be used to execute various tasks (e.g., manipulate or transfer an object through space) in manufacturing and/or assembly, packing and/or packaging, transport and/or shipping, etc. In executing the tasks, the robots can replicate human actions, thereby replacing or reducing human involvements that are otherwise required to perform dangerous or repetitive tasks.

However, despite the technological advancements, robots often lack the sophistication necessary to duplicate human interactions required for executing larger and/or more complex tasks. Furthermore, robots often lack the capability of rapid transport and deployment to multiple locations within work environments. Accordingly, there remains a need for improved techniques and systems for managing operations and/or interactions between robots, and there further remains a need for improved mobility of robotic systems to allow for rapid relocation within work environments.

According to a first aspect of the present invention, there is provided a robotic system, comprising: a control system; a transfer unit cell for the transfer of objects, the transfer unit cell being in communication with the control system and translatable between a deployed configuration configured to receive a pallet within the transfer unit cell, and a retracted configuration wherein the transfer unit cell is retracted into itself, the transfer unit cell further including: a cell base plate; a robotic arm mount positioned on the cell base plate for attachment of a robotic arm; a conveyor system positioned on the cell base plate and adjacent the robotic arm mount for receiving a target object; a sensor mount attached to the cell base plate for a sensor system including a sensor array; and a unit enclosure mounted to the cell base plate of the transfer unit cell to facilitate transport of the transfer unit cell, and translation of the transfer unit cell between the deployed configuration and the retracted configuration.

In one embodiment, the retracted configuration of the transfer unit cell includes the conveyor system, the cell base plate, and the sensor mount being retracted into the transfer unit cell.

In one embodiment, the cell base plate includes base extensions extending from an edge of the cell base plate and forming a container placement area between the base extensions, the base extensions formed to provide stability and/or balance to support the transfer unit cell while in the deployed configuration.

In one embodiment, the base extensions are detachable from the edge of the cell base plate to reduce a footprint of the transfer unit cell while in the retracted configuration.

In one embodiment, the base extensions are hingedly connected to the edge of the cell base plate to permit folding of the base extensions toward the cell base plate to reduce a footprint of the transfer unit cell while in the retracted configuration.

In one embodiment, the cell base plate includes anchorless support features including one or more friction increasing components extending from a bottom surface of the cell base plate.

In one embodiment, the robotic arm further includes a distal end with an end effector apparatus disposed thereon, the end effector apparatus configured for interacting with the target object.

In one embodiment, the conveyor system is mounted to the cell base plate and is extendable beyond an edge of the cell base plate, the conveyor system further including a dynamic platform for movement of the target object received from the robotic arm.

In one embodiment, the unit enclosure further includes: a frame surrounding the transfer unit cell, the frame including vertical posts extending substantially perpendicularly from the cell base plate, and a fence attached to and between each of the vertical posts, such that the fence includes separable portions moveable to expose or cover portions of the transfer unit cell.

According to a second aspect of the present invention, there is provided a transfer unit cell for deployment of a robotic system, the transfer unit cell comprising: a cell base plate for the transfer of objects, the transfer unit cell being translatable between a deployed configuration configured to receive and secure a pallet, and a retracted configuration wherein the transfer unit cell is retracted into itself; a robotic arm mount positioned on the cell base plate for attachment of a robotic arm; a conveyor system positioned on the cell base plate and adjacent the robotic arm mount for receiving a target object; a sensor mount attached to the cell base plate for receiving a sensor system including a sensor array; and a unit enclosure mounted to the cell base plate to facilitate transport of the transfer unit cell, and translation of the transfer unit cell between the deployed configuration and the retracted configuration.

In one embodiment, the cell base plate further includes base extensions extending from an edge of the cell base plate and forming a container placement area between the base extensions, the base extensions configured to provide stability and/or balance to support the transfer unit cell during operation and motion of the robotic arm while in the deployed configuration.

In one embodiment, the base extensions are detachable from the edge of the cell base plate to reduce a footprint of the transfer unit cell while in the retracted configuration.

In one embodiment, the base extensions are hingedly connected to the edge of the cell base plate to permit the base extensions to fold toward the cell base plate to reduce a footprint of the transfer unit cell while in the retracted configuration.

In one embodiment, the cell base plate further provides anchorless support features including one or more friction-increasing components extending from a bottom surface of the cell base plate.

In one embodiment, the conveyor system is mounted to the cell base plate and is extendable beyond an edge of the cell base plate, the conveyor system further including a dynamic platform for movement of the target object received from the robotic arm.

In one embodiment, the sensor array includes any combination of two-dimensional cameras, three-dimensional cameras, scanners, and/or lighting arrays.

In one embodiment, the unit enclosure includes a frame surrounding the transfer unit cell, the frame including vertical posts extending perpendicularly from the cell base plate, and the unit enclosure further includes a fence attached to and between each of the vertical posts, such that the fence includes separable portions moveable to expose or cover portions of the transfer unit cell.

According to a third aspect of the present invention, there is provided a method for rapid deployment and integration of a robotic system, comprising: deploying a transfer unit cell having a cell base plate into a deployed configuration configured to receive and secure a pallet, containing a plurality of objects; securing the transfer unit cell in the deployed configuration such that the transfer unit cell is stabilized to support the transfer unit cell; sensing the plurality of objects contained on the pallet via a sensor system including a sensor array attached to a sensor mount of the transfer unit cell; controlling a robotic arm of the transfer unit cell to interact with a target object sensed from among the plurality of objects contained on the pallet; and transferring the target object from the pallet to a conveyor system of the transfer unit cell.

In one embodiment, the method further comprises: loading the transfer unit cell having a cell base plate onto a transport vehicle in a transport configuration; and deploying the transfer unit cell into the deployed configuration.

In one embodiment, the method further comprises: retracting the transfer unit cell into a retracted configuration wherein the transfer unit cell is retracted into itself; translating the transfer unit cell from the retracted configuration into a transport configuration; and moving the transfer unit cell via a transport vehicle.

In embodiments, a transfer unit cell for deployment of a robotic system is provided. The transfer unit cell may include a transfer unit cell for the transfer of objects, the transfer unit cell being in communication with the control system and translatable between a deployed configuration configured to receive a pallet within the transfer unit cell, and a retracted configuration wherein the transfer unit cell is retracted into itself, the transfer unit cell further including: a cell base plate; a robotic arm mount on the cell base plate for attachment of a robotic arm; a conveyor system, adjacent the robotic arm mount, for receiving a target object; a sensor mount attached to the cell base plate for a sensor system including a sensor array; and a unit enclosure mounted to the cell base plate of the transfer unit cell to facilitate transport of the transfer unit cell, and translation of the transfer unit cell between the deployed configuration and the retracted configuration.

In embodiments, a transfer unit cell for deployment of a robotic system is provided. The transfer unit cell may include a cell base plate for the transfer of objects, the transfer unit cell being translatable between a deployed configuration configured to receive and secure a pallet, and a retracted configuration wherein the transfer unit cell is retracted into itself; a robotic arm mount for receiving a robotic arm; a conveyor system for receiving a target object; a sensor mount for receiving a sensor system including a sensor array; and a unit enclosure mounted to the cell base plate to facilitate transport of the transfer unit cell, and translation of the transfer unit cell between the deployed configuration and the retracted configuration.

In embodiments, a method for rapid deployment and integration of a robotic system is provided. The method may include: locating and deploying a transfer unit cell having a cell base plate into a deployed configuration configured to receive and secure a pallet, containing a plurality of objects; securing the transfer unit cell in the deployed configuration such that the transfer unit cell is stabilized to support the transfer unit cell; sensing the plurality of objects contained on the pallet via a sensor system including a sensor array attached to a sensor mount of the transfer unit cell; controlling a robotic arm of the transfer unit cell to interact with a target object sensed from among the plurality of objects contained on the pallet; and transferring the target object from the pallet to a conveyor system of the transfer unit cell.
FIG. 1A illustrates a system for performing or facilitating the detection, identification, and retrieval of objects according to embodiments hereof.
FIG. 1B illustrates an embodiment of the system for performing or facilitating the detection, identification, and retrieval of objects according to embodiments hereof.
FIG. 1C illustrates another embodiment of the system for performing or facilitating the detection, identification, and retrieval of objects according to embodiments hereof.
FIG. 1D illustrates yet another embodiment of the system for performing or facilitating the detection, identification, and retrieval of objects according to embodiments hereof.
FIG. 2A is a block diagram that illustrates a computing system configured to perform or facilitate the detection, identification, and retrieval of objects, consistent with embodiments hereof.
FIG. 2B is a block diagram that illustrates an embodiment of a computing system configured to perform or facilitate the detection, identification, and retrieval of objects, consistent with embodiments hereof.
FIG. 2C is a block diagram that illustrates another embodiment of a computing system configured to perform or facilitate the detection, identification, and retrieval of objects, consistent with embodiments hereof.
FIG. 2D is a block diagram that illustrates yet another embodiment of a computing system configured to perform or facilitate the detection, identification, and retrieval of objects, consistent with embodiments hereof.
FIG. 2E is an example of image information processed by systems and consistent with embodiments hereof.
FIG. 2F is another example of image information processed by systems and consistent with embodiments hereof.
FIG. 3A illustrates an exemplary environment for operating a robotic system, according to embodiments hereof.
FIG. 3B illustrates an exemplary environment for the detection, identification, and retrieval of objects by a robotic system, consistent with embodiments hereof.
FIG. 3C illustrates an exemplary environment in which a robotic system and transfer unit cell may operate according to embodiments hereof.
FIG. 4 is a block diagram illustrating an embodiment of a robotic system in accordance with one or more embodiments of the present technology.
FIG. 5 illustrates an embodiment of a transfer unit cell implementing a robotic system according to embodiments herein.
FIG. 6 illustrates an embodiment of a cell base plate and a robotic arm mount of the transfer unit cell of FIG. 5.
FIG. 7 illustrates an embodiment of a sensor system of the transfer unit cell of FIG. 5.
FIG. 8 illustrates a front elevational view of the transfer unit cell of FIG. 5.
FIG. 9A illustrates a perspective view of the transfer unit cell of FIG. 5 in a deployed configuration according to embodiments herein.
FIG. 9B illustrates another perspective view of the transfer unit cell of FIG. 5 in the deployed configuration according to embodiments herein.
FIG. 10A illustrates a side elevational view of the transfer unit cell of FIG. 5 in the deployed configuration according to embodiments herein.
FIG. 10B illustrates a side elevational view of the transfer unit cell of FIG. 5 in a retracted configuration according to embodiments herein.
FIG. 10C illustrates a side elevational view of the transfer unit cell of FIG. 5 in a partially retracted configuration according to embodiments herein.
FIG. 11A illustrates a perspective view of a transfer unit cell in a transport configuration and corresponding transport unit or vehicle according to embodiments herein.
FIG. 11B illustrates another perspective view of the transfer unit cell in the transport configuration and the transport unit or vehicle of FIG. 11A.
FIG. 12 provides a flow diagram illustrating an overall flow of methods and operations for the rapid deployment and integration of a robotic system according to embodiments herein.

Systems and methods for a robotic system with a coordinated transfer mechanism are described herein. The robotic system (e.g., an integrated system of devices that each execute one or more designated tasks) configured in accordance with some embodiments autonomously executes integrated tasks by coordinating operations of multiple units (e.g., robots). A depalletization robot is configured for integration with a transportable box or frame structure that can provide automation to a warehouse or other work environment without requiring adjustments to the warehouse/work environment infrastructure. The transportable frame structure can be delivered, located, deployed, and be made operational within a day to provide work environment automation without necessitating excessive cost outlay or time to deployment. More particularly, the transportable frame structure and integrated robot may be sized to fit within standard shipping containers to achieve this rapid delivery, location, deployment, and operation aspects as further detailed herein.

In the following, numerous specific details are set forth to provide a thorough understanding of the presently disclosed technology. In other embodiments, the techniques introduced here can be practiced without these specific details. In other instances, well-known features, such as specific functions or routines, are not described in detail in order to avoid unnecessarily obscuring the present disclosure. References in this description to "an embodiment," "one embodiment," or the like mean that a particular feature, structure, material, or characteristic being described is included in at least one embodiment of the present disclosure. Thus, the appearances of such phrases in this specification do not necessarily all refer to the same embodiment. On the other hand, such references are not necessarily mutually exclusive either. Furthermore, the particular features, structures, materials, or characteristics can be combined in any suitable manner in one or more embodiments. It is to be understood that the various embodiments shown in the figures are merely illustrative representations and are not necessarily drawn to scale.

The present application refers to systems and robotic systems. Robotic systems, as discussed herein, may include robotic actuator components (e.g., robotic arms, robotic grippers, etc.), various sensors (e.g., cameras, etc.), and various computing or control systems. As discussed herein, computing systems or control systems may be referred to as "controlling" various robotic components, such as robotic arms, robotic grippers, cameras, etc. Such "control" may refer to direct control of and interaction with the various actuators, sensors, and other functional aspects of the robotic components. For example, a computing system may control a robotic arm by issuing or providing all of the required signals to cause the various motors, actuators, and sensors to cause robotic movement. Such "control" may also refer to the issuance of abstract or indirect commands to a further robotic control system that then translates such commands into the necessary signals for causing robotic movement. For example, a computing system may control a robotic arm by issuing a command describing a trajectory or destination location to which the robotic arm should move to and a further robotic control system associated with the robotic arm may receive and interpret such a command and then provide the necessary direct signals to the various actuators and sensors of the robotic arm to cause the required movement.

Several details describing structures or processes that are well-known and often associated with robotic systems and subsystems, but that can unnecessarily obscure some significant aspects of the disclosed techniques, are not set forth in the following description for purposes of clarity. Moreover, although the following disclosure sets forth several embodiments of different aspects of the present technology, several other embodiments may have different configurations or different components than those described in this section. Accordingly, the disclosed techniques may have other embodiments with additional elements or without several of the elements described below.

Many embodiments or aspects of the present disclosure described below may take the form of computer- or controller-executable instructions, including routines executed by a programmable computer or controller. Those skilled in the relevant art will appreciate that the disclosed techniques can be practiced on or with computer or controller systems other than those shown and described below. The techniques described herein can be embodied in a special-purpose computer or data processor that is specifically programmed, configured, or constructed to execute one or more of the computer-executable instructions described below. Accordingly, the terms "computer" and "controller" as generally used herein refer to any data processor and can include Internet appliances and handheld devices (including palm-top computers, wearable computers, cellular or mobile phones, multi-processor systems, processor-based or programmable consumer electronics, network computers, minicomputers, and the like). Information handled by these computers and controllers can be presented at any suitable display medium, including a liquid crystal display (LCD). Instructions for executing computer- or controller-executable tasks can be stored in or on any suitable computer-readable medium, including hardware, firmware, or a combination of hardware and firmware. Instructions can be contained in any suitable memory device, including, for example, a flash drive, USB device, and/or other suitable medium.

The terms "coupled" and "connected," along with their derivatives, can be used herein to describe structural relationships between components. It should be understood that these terms are not intended as synonyms for each other. Rather, in particular embodiments, "connected" can be used to indicate that two or more elements are in direct contact with each other. Unless otherwise made apparent in the context, the term "coupled" can be used to indicate that two or more elements are in either direct or indirect (with other intervening elements between them) contact with each other, or that the two or more elements co-operate or interact with each other (e.g., as in a cause-and-effect relationship, such as for signal transmission/reception or for function calls), or both.

Any reference herein to image analysis by a computing system may be performed according to or using spatial structure information that may include depth information which describes respective depth value of various locations relative a chosen point. The depth information may be used to identify objects or estimate how objects are spatially arranged. In some instances, the spatial structure information may include or may be used to generate a point cloud that describes locations of one or more surfaces of an object. Spatial structure information is merely one form of possible image analysis and other forms known by one skilled in the art may be used in accordance with the methods described herein.

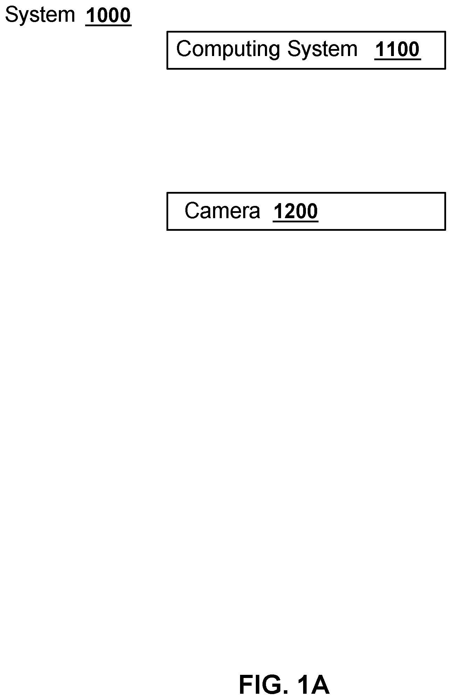

FIG. 1A illustrates a system 1000 that may include a computing system or computer system 1100 and a camera 1200. In this example, the camera 1200 may be configured to generate image information which describes or otherwise represents an environment in which the camera 1200 is located, or, more specifically, represents an environment in the camera's 1200 field of view (also referred to as a camera field of view). The environment may be, e.g., a warehouse, a manufacturing plant, a retail space, or other premises. In such instances, the image information may represent objects located at such premises, such as boxes, bins, cases, crates, pallets, or other containers. The system 1000 may be configured to generate, receive, and/or process the image information, such as by using the image information to distinguish between individual objects in the camera field of view, to perform object recognition or object registration based on the image information, and/or perform robot interaction planning based on the image information, as discussed below in more detail (the terms "and/or" and "or" are used interchangeably in this disclosure). The robot interaction planning may be used to, e.g., control a robot at the premises to facilitate robot interaction between the robot and the containers or other objects. The computing system 1100 and the camera 1200 may be located at the same premises or may be located remotely from each other. For instance, the computing system 1100 may be part of a cloud computing platform hosted in a data center which is remote from the warehouse or retail space and may be communicating with the camera 1200 via a network connection.

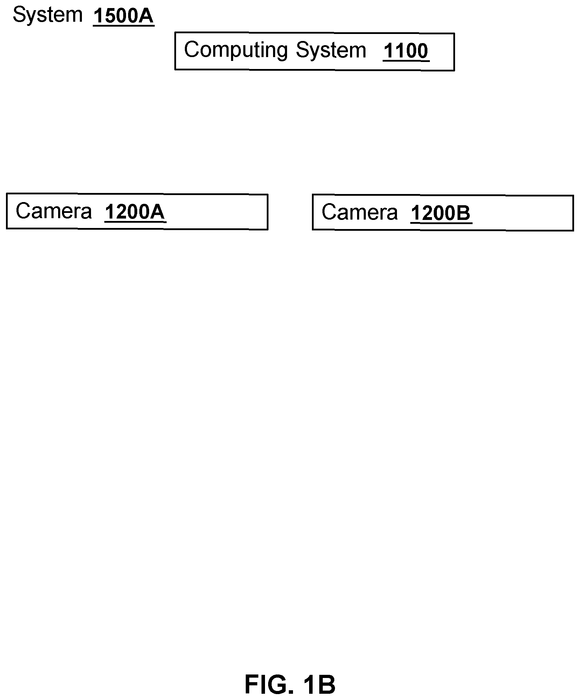

In embodiments, the camera 1200 (which may also be referred to as an image sensing device) may be a 2D camera and/or a 3D camera. For example, FIG. 1B illustrates a system 1500A (which may be an embodiment of the system 1000) that includes the computing system 1100 as well as a camera 1200A and a camera 1200B, both of which may be an embodiment of the camera 1200. In this example, the camera 1200A may be a 2D camera that is configured to generate 2D image information which includes or forms a 2D image that describes a visual appearance of the environment in the camera's field of view. The camera 1200B may be a 3D camera (also referred to as a spatial structure sensing camera or spatial structure sensing device) that is configured to generate 3D image information which includes or forms spatial structure information regarding an environment in the camera's field of view. The spatial structure information may include depth information (e.g., a depth map) which describes respective depth values of various locations relative to the camera 1200B, such as locations on surfaces of various objects in the camera 1200B's field of view. These locations in the camera's field of view or on an object's surface may also be referred to as physical locations. The depth information in this example may be used to estimate how the objects are spatially arranged in three-dimensional (3D) space. In some instances, the spatial structure information may include or may be used to generate a point cloud that describes locations on one or more surfaces of an object in the camera 1200B's field of view. More specifically, the spatial structure information may describe various locations on a structure of the object (also referred to as an object structure).

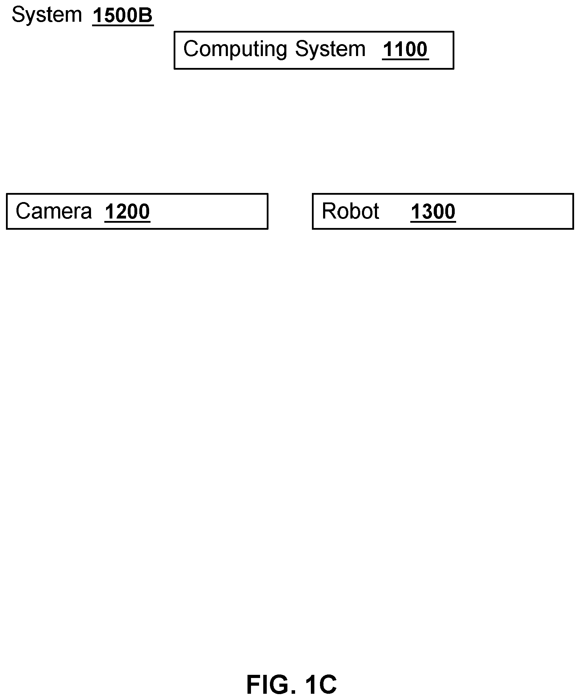

In embodiments, the system 1000 may be a robot operation system for facilitating robot interaction between a robot and various objects in the environment of the camera 1200. For example, FIG. 1C illustrates a robot operation system 1500B, which may be an embodiment of the system 1000/1500A of FIGS. 1A and 1B. The robot operation system 1500B may include the computing system 1100, the camera 1200, and a robot 1300. As stated above, the robot 1300 may be used to interact with one or more objects in the environment of the camera 1200, such as with boxes, crates, bins, pallets, or other containers. For example, the robot 1300 may be configured to pick up the containers from one location and move them to another location. In some cases, the robot 1300 may be used to perform a de-palletization operation in which a group of containers or other objects are unloaded and moved to, e.g., a conveyor belt. In some implementations, the camera 1200 may be attached to the robot 1300 or the robot/robotic arm 306, discussed below. This is also known as a camera in-hand or a camera on-hand solution. The camera 1200 may be attached to the robot 1300/306. The robot 1300/306 may then move to various picking regions to generate image information regarding those regions. In some implementations, the camera 1200 may be separate from the robot 1300/306. For instance, the camera 1200 may be mounted to a ceiling of a warehouse or other structure such as a transfer unit cell 104, as further described below, and may remain stationary relative to the structure. In some implementations, multiple cameras 1200 may be used, including multiple cameras 1200 separate from the robot 1300/306 and/or cameras 1200 separate from the robot 1300/306 being used in conjunction with in-hand cameras 1200. In some implementations, a camera 1200 or cameras 1200 may be mounted or affixed to a dedicate robotic system separate from the robot 1300/306 used for object manipulation, such as a robotic arm, gantry, or other automated system configured for camera movement. Throughout the specification, "control" or "controlling" the camera 1200 may be discussed. For camera in-hand solutions, control of the camera 1200 also includes control of the robot 1300/306 to which the camera 1200 is mounted or attached.

In embodiments, the computing system 1100 of FIGS. 1A-1C may form or be integrated into the robot 1300/306, which may also be referred to as a robot controller. A robot control system may be included in the system 1500B, and is configured to e.g., generate commands for the robot 1300/306, such as a robot interaction movement command for controlling robot interaction between the robot 1300/306 and a container or other object. In such an embodiment, the computing system 1100 may be configured to generate such commands based on, e.g., image information generated by the camera 1200. For instance, the computing system 1100 may be configured to determine a motion plan based on the image information, wherein the motion plan may be intended for, e.g., gripping or otherwise grasping an object. The computing system 1100 may generate one or more robot interaction movement commands to execute the motion plan.

In embodiments, the computing system 1100 may form or be part of a vision system. The vision system may be a system which generates, e.g., vision information which describes an environment in which the robot 1300/306 is located, or, alternatively or in addition to, describes an environment in which the camera 1200 is located. The vision information may include the 3D image information and/or the 2D image information discussed above, or some other image information. In some scenarios, if the computing system 1100 forms a vision system, the vision system may be part of the robot control system discussed above or may be separate from the robot control system. If the vision system is separate from the robot control system, the vision system may be configured to output information describing the environment in which the robot 1300/306 is located. The information may be outputted to the robot control system, which may receive such information from the vision system and performs motion planning and/or generates robot interaction movement commands based on the information. Further information regarding the vision system is detailed below.

In embodiments, the computing system 1100 may communicate with the camera 1200 and/or with the robot 1300/306 via a direct connection, such as a connection provided via a dedicated wired communication interface, such as a RS-232 interface, a universal serial bus (USB) interface, and/or via a local computer bus, such as a peripheral component interconnect (PCI) bus. In embodiments, the computing system 1100 may communicate with the camera 1200 and/or with the robot 1300/306 via a network. The network may be any type and/or form of network, such as a personal area network (PAN), a local-area network (LAN), e.g., Intranet, a metropolitan area network (MAN), a wide area network (WAN), or the Internet. The network may utilize different techniques and layers or stacks of protocols, including, e.g., the Ethernet protocol, the internet protocol suite (TCP/IP), the ATM (Asynchronous Transfer Mode) technique, the SONET (Synchronous Optical Networking) protocol, or the SDH (Synchronous Digital Hierarchy) protocol.

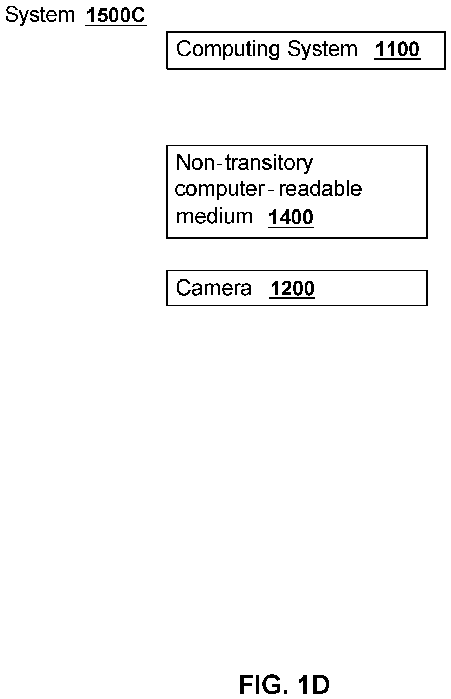

In embodiments, the computing system 1100 may communicate information directly with the camera 1200 and/or with the robot 1300/306, or may communicate via an intermediate storage device, or more generally an intermediate non-transitory computer-readable medium. For example, FIG. 1D illustrates a system 1500C, which may be an embodiment of the system 1000/1500A/1500B, that includes a non-transitory computer-readable medium 1400, which may be external to the computing system 1100, and may act as an external buffer or repository for storing, e.g., image information generated by the camera 1200. In such an example, the computing system 1100 may retrieve or otherwise receive the image information from the non-transitory computer-readable medium 1400. Examples of the non-transitory computer readable medium 1400 include an electronic storage device, a magnetic storage device, an optical storage device, an electromagnetic storage device, a semiconductor storage device, or any suitable combination thereof. The non-transitory computer-readable medium may form, e.g., a computer diskette, a hard disk drive (HDD), a solid-state drive (SDD), a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), and/or a memory stick.

As stated above, the camera 1200 may be a 3D camera and/or a 2D camera. The 2D camera may be configured to generate a 2D image, such as a color image or a grayscale image. The 3D camera may be, e.g., a depth-sensing camera, such as a time-of-flight (TOF) camera or a structured light camera, or any other type of 3D camera. In some cases, the 2D camera and/or 3D camera may include an image sensor, such as a charge coupled devices (CCDs) sensor and/or complementary metal oxide semiconductors (CMOS) sensor. In embodiments, the 3D camera may include lasers, a LIDAR device, an infrared device, a light/dark sensor, a motion sensor, a microwave detector, an ultrasonic detector, a RADAR detector, or any other device configured to capture depth information or other spatial structure information.

As stated above, the image information may be processed by the computing system 1100. In embodiments, the computing system 1100 may include or be configured as a server (e.g., having one or more server blades, processors, etc.), a personal computer (e.g., a desktop computer, a laptop computer, etc.), a smartphone, a tablet computing device, and/or other any other computing system. In embodiments, any or all of the functionality of the computing system 1100 may be performed as part of a cloud computing platform. The computing system 1100 may be a single computing device (e.g., a desktop computer), or may include multiple computing devices.

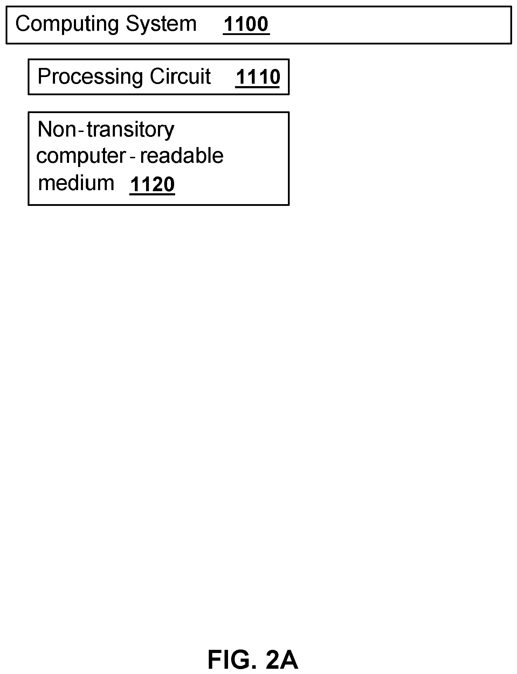

FIG. 2A provides a block diagram that illustrates an embodiment of the computing system 1100. The computing system 1100 in this embodiment includes at least one processing circuit 1110 and a non-transitory computer-readable medium (or media) 1120. In some instances, the processing circuit 1110 may include processors (e.g., central processing units (CPUs), special-purpose computers, and/or onboard servers) configured to execute instructions (e.g., software instructions) stored on the non-transitory computer-readable medium 1120 (e.g., computer memory). In some embodiments, the processors may be included in a separate/stand-alone controller that is operably coupled to the other electronic/electrical devices. The processors may implement the program instructions to control/interface with other devices, thereby causing the computing system 1100 to execute actions, tasks, and/or operations. In embodiments, the processing circuit 1110 includes one or more processors, one or more processing cores, a programmable logic controller ("PLC"), an application specific integrated circuit ("ASIC"), a programmable gate array ("PGA"), a field programmable gate array ("FPGA"), any combination thereof, or any other processing circuit.

In embodiments, the non-transitory computer-readable medium 1120, which is part of the computing system 1100, may be an alternative or addition to the intermediate non-transitory computer-readable medium 1400 discussed above. The non-transitory computer-readable medium 1120 may be a storage device, such as an electronic storage device, a magnetic storage device, an optical storage device, an electromagnetic storage device, a semiconductor storage device, or any suitable combination thereof, for example, such as a computer diskette, a hard disk drive (HDD), a solid state drive (SSD), a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, any combination thereof, or any other storage device. In some instances, the non-transitory computer-readable medium 1120 may include multiple storage devices. In certain implementations, the non-transitory computer-readable medium 1120 is configured to store image information generated by the camera 1200 and received by the computing system 1100. In some instances, the non-transitory computer-readable medium 1120 may store one or more object recognition template used for performing methods and operations discussed herein. The non-transitory computer-readable medium 1120 may alternatively or additionally store computer readable program instructions that, when executed by the processing circuit 1110, causes the processing circuit 1110 to perform one or more methodologies described here.

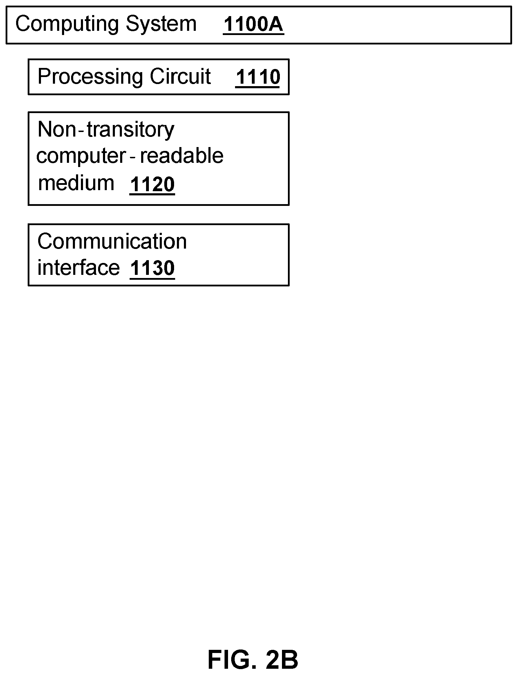

FIG. 2B depicts a computing system 1100A that is an embodiment of the computing system 1100 and includes a communication interface 1130. The communication interface 1130 may be configured to, e.g., receive image information generated by the camera 1200 of FIGS. 1A-1D. The image information may be received via the intermediate non-transitory computer-readable medium 1400 or the network discussed above, or via a more direct connection between the camera 1200 and the computing system 1100/1100A. In embodiments, the communication interface 1130 may be configured to communicate with the robot 1300 of FIG. 1C or robot 306 as further described herein. If the computing system 1100 is external to a robot control system, the communication interface 1130 of the computing system 1100 may be configured to communicate with the robot control system. The communication interface 1130 may also be referred to as a communication component or communication circuit, and may include, e.g., a communication circuit configured to perform communication over a wired or wireless protocol. As an example, the communication circuit may include a RS-232 port controller, a USB controller, an Ethernet controller, a Bluetooth^{®} controller, a PCI bus controller, any other communication circuit, or a combination thereof.

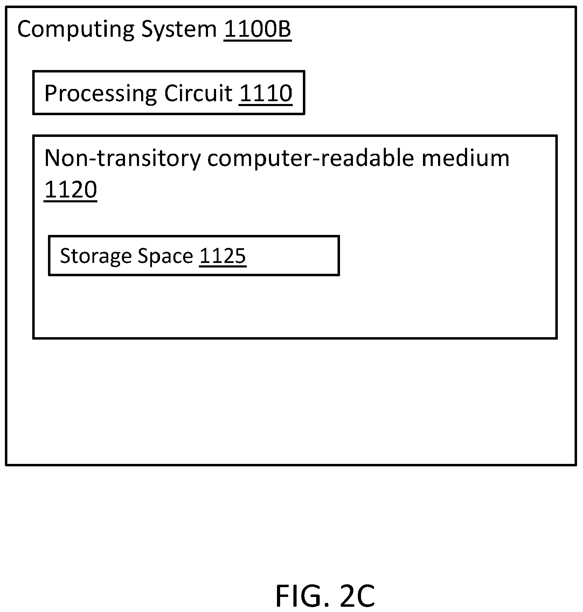

In an embodiment of the computing system 1100B, as depicted in FIG. 2C, the non-transitory computer-readable medium 1120 may include a storage space 1125 configured to store one or more data objects discussed herein. For example, the storage space may store object recognition templates, detection hypotheses, image information, object image information, robotic arm move commands, and any additional data objects the computing systems discussed herein may require access to.

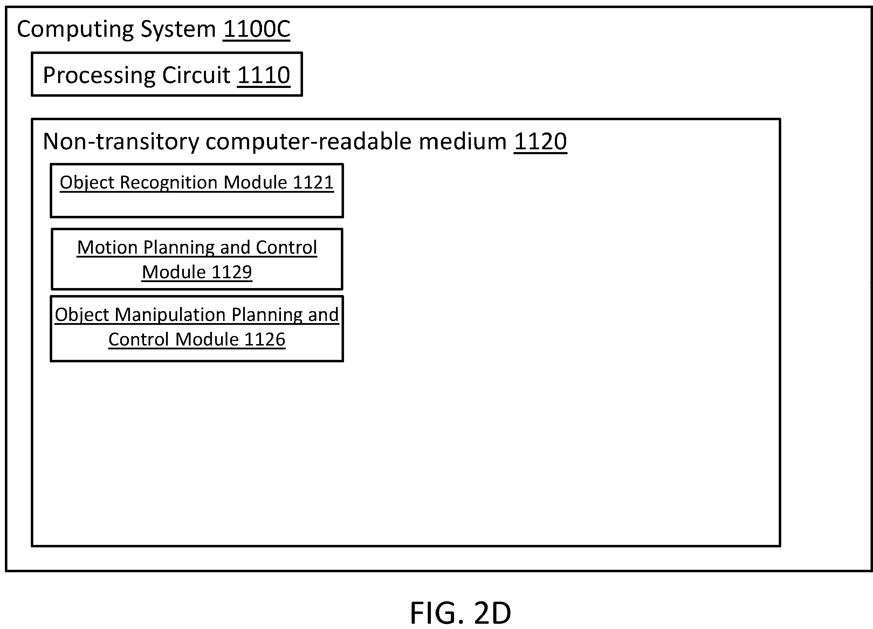

In an embodiment, the processing circuit 1110 may be programmed by one or more computer-readable program instructions stored on the non-transitory computer-readable medium 1120. For example, FIG. 2D illustrates a computing system 1100C, which is an embodiment of the computing system 1100/1100A/1100B, in which the processing circuit 1110 is programmed by one or more modules, including an object recognition module 1121, a motion planning and control module 1129, and an object manipulation planning and control module 1126. Each of the above modules may represent computer-readable program instructions configured to carry out certain tasks when instantiated on one or more of the processors, processing circuits, computing systems, etc., described herein. Each of the above modules may operate in concert with one another to achieve the functionality described herein. Various aspects of the functionality described herein may be carried out by one or more of the software modules described above and the software modules and their descriptions are not to be understood as limiting the computational structure of systems disclosed herein. For example, although a specific task or functionality may be described with respect to a specific module, that task or functionality may also be performed by a different module as required. Further, the system functionality described herein may be performed by a different set of software modules configured with a different breakdown or allotment of functionality.

In an embodiment, the object recognition module 1121 may be configured to obtain and analyze image information as discussed throughout the disclosure. Methods, systems, and techniques discussed herein with respect to image information may use the object recognition module 1121. The object recognition module may further be configured for object recognition tasks related to object identification, as discussed herein.

The motion planning and control module 1129 may be configured plan and execute the movement of a robot. For example, the motion planning and control module 1129 may interact with other modules described herein to plan motion of a robot 3300 for object retrieval operations and for camera placement operations. Methods, systems, and techniques discussed herein with respect to robotic arm movements and trajectories may be performed by the motion planning and control module 1129.

In embodiments, the motion planning and control module 1129 may be configured to plan robotic motion and robotic trajectories to account for the carriage of soft objects. As discussed herein, soft objects may have a tendency to droop, sag, flex, bend, etc. during movement. Such tendencies may be addressed by the motion planning and control module 1129. For example, during lifting operations, it may be expected that a soft object will sag or flex, causing forces on the robotic arm (and associated gripping devices, as described below) to vary, alter, or change in unpredictable ways. Accordingly, the motion planning and control module 1129 may be configured to include control parameters that provide a greater degree of reactivity, permitting the robotic system to adjust to alterations in load more quickly. In another example, soft objects may be expected to swing or flex (*e.g.,* predicted flex behavior) during movement due to internal momentum. Such movements may be adjusted for by the motion planning and control module 1129 by calculating the predicted flex behavior of an object. In yet another example, the motion planning and control module 1129 may be configured to predict or otherwise account for a deformed or altered shape of a transported soft object when the object is deposited at a destination. The flexing or deformation of a soft object (*e.g.,* flex behavior) may result in an object of a different shape, footprint, etc., then that same object had when it was initially lifted. Thus, the motion planning and control module 1129 may be configured to predict or otherwise account for such changes when placing the object down.

The object manipulation planning and control module 1126 may be configured to plan and execute the object manipulation activities of a robotic arm or end effector apparatus, e.g., grasping and releasing objects and executing robotic arm commands to aid and facilitate such grasping and releasing. As discussed below, dual grippers and adjustable multi-point gripping devices may require a series of integrated and coordinated operations to grasp, lift, and transport objects. Such operations may be coordinated by the object manipulation planning and control module 1126 to ensure smooth operation of the dual grippers and adjustable multi-point gripping devices.

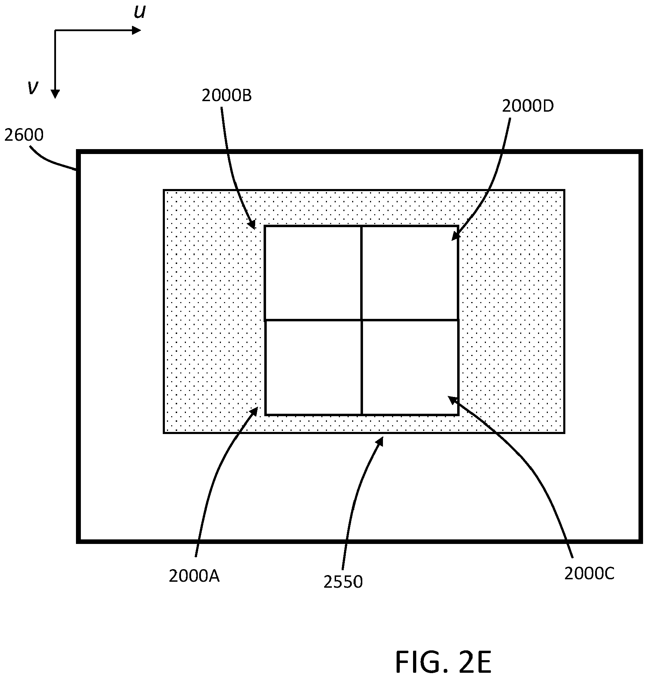

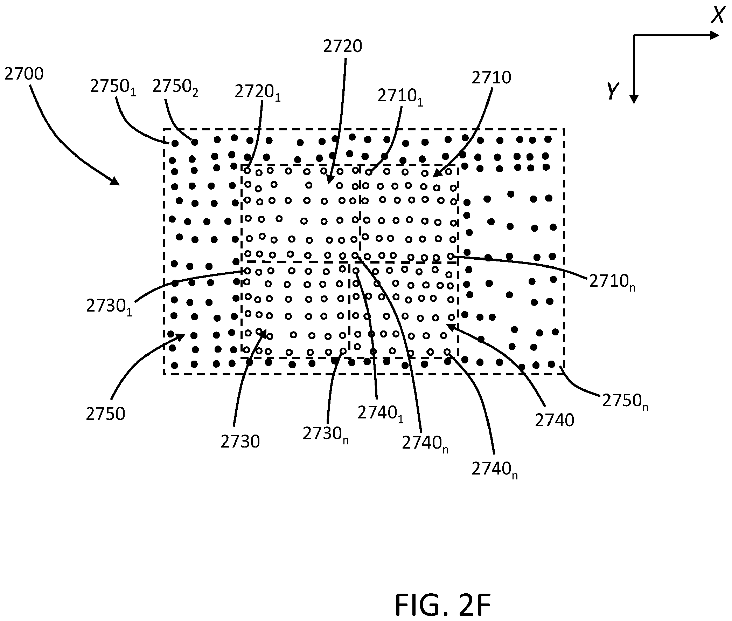

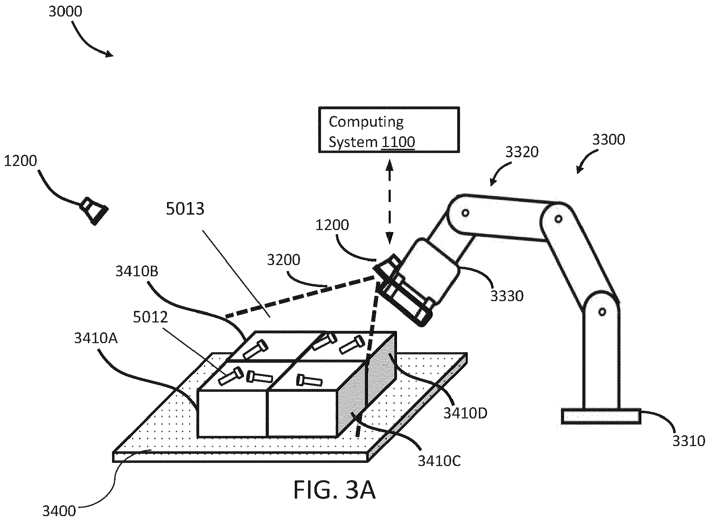

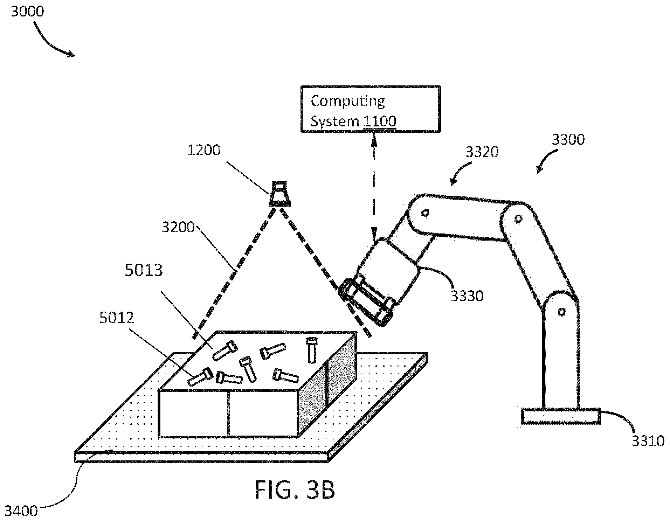

With reference to FIGS. 2E, 2F, 3A, and 3B, methods related to the object recognition module 1121 that may be performed for image analysis are explained. FIGS. 2E and 2F illustrate example image information associated with image analysis methods while FIGS. 3A and 3B illustrate example robotic environments associated with image analysis methods. References herein related to image analysis by a computing system may be performed according to or using spatial structure information that may include depth information which describes respective depth value of various locations relative to a chosen point. The depth information may be used to identify objects or estimate how objects are spatially arranged. In some instances, the spatial structure information may include or may be used to generate a point cloud that describes locations of one or more surfaces of an object. Spatial structure information is merely one form of possible image analysis and other forms known by one skilled in the art may be used in accordance with the methods described herein.

In embodiments, the computing system 1100 may obtain image information representing an object in a camera field of view (e.g., field of view 3200) of a camera 1200. In some instances, the object may be at least one target object 112 from a plurality of objects in a start/source location 114 in a field of view of a camera 1200, as described below. The steps and techniques described below for obtaining image information may be referred to below as an image information capture operation 5002. In some instances, the object may be one object from a plurality of objects in the field of view 3200 of a camera 1200. The image information 2600, 2700 may be generated by the camera (e.g., camera 1200) when the objects are (or have been) in the camera field of view 3200 and may describe one or more of the individual objects in the field of view 3200 of a camera 1200. The object appearance describes the appearance of an object from the viewpoint of the camera 1200. If there are multiple objects in the camera field of view, the camera may generate image information that represents the multiple objects or a single object (such image information related to a single object may be referred to as object image information), as necessary. The image information may be generated by the camera (e.g., camera 1200) when the group of objects is (or has been) in the camera field of view, and may include, e.g., 2D image information and/or 3D image information.

As an example, FIG. 2E depicts a first set of image information, or more specifically, 2D image information 2600, which, as stated above, is generated by the camera 1200 and represents the objects 3410A/3410B/3410C/3410D of FIG. 3A situated on the object 3550, which may be, e.g., a pallet on which the objects 3410A/3410B/3410C/3410D are disposed. More specifically, the 2D image information 2600 may be a grayscale or color image and may describe an appearance of the objects 3410A/3410B/3410C/3410D/3550 from a viewpoint of the camera 1200. In an embodiment, the 2D image information 2600 may correspond to a single-color channel (e.g., red, green, or blue color channel) of a color image. If the camera 1200 is disposed above the objects 3410A/3410B/3410C/3410D/3550, then the 2D image information 2600 may represent an appearance of respective top surfaces of the objects 3410A/3410B/3410C/3410D/3550. In the example of FIG. 2E, the 2D image information 2600 may include respective portions 2000A/2000B/2000C/2000D/2550, also referred to as image portions or object image information, that represent respective surfaces of the objects 3410A/3410B/3410C/3410D/3550. In FIG. 2E, each image portion 2000A/2000B/2000C/2000D/2550 of the 2D image information 2600 may be an image region, or more specifically a pixel region (if the image is formed by pixels). Each pixel in the pixel region of the 2D image information 2600 may be characterized as having a position that is described by a set of coordinates [U, V] and may have values that are relative to a camera coordinate system, or some other coordinate system, as shown in FIGS. 2E and 2F. Each of the pixels may also have an intensity value, such as a value between 0 and 255 or 0 and 1023. In further embodiments, each of the pixels may include any additional information associated with pixels in various formats (e.g., hue, saturation, intensity, CMYK, RGB, etc.)

As stated above, the image information may in some embodiments be all or a portion of an image, such as the 2D image information 2600. In examples, the computing system 1100 may be configured to extract an image portion 2000A from the 2D image information 2600 to obtain only the image information associated with a corresponding object 3410A. Where an image portion (such as image portion 2000A) is directed towards a single object it may be referred to as object image information. Object image information is not required to contain information only about an object to which it is directed. For example, the object to which it is directed may be close to, under, over, or otherwise situated in the vicinity of one or more other objects. In such cases, the object image information may include information about the object to which it is directed as well as to one or more neighboring objects. The computing system 1100 may extract the image portion 2000A by performing an image segmentation or other analysis or processing operation based on the 2D image information 2600 and/or 3D image information 2700 illustrated in FIG. 2F. In some implementations, an image segmentation or other processing operation may include detecting image locations at which physical edges of objects appear (e.g., edges of the object) in the 2D image information 2600 and using such image locations to identify object image information that is limited to representing an individual object in a camera field of view (e.g., field of view 3200) and substantially excluding other objects. By "substantially excluding," it is meant that the image segmentation or other processing techniques are designed and configured to exclude non-target objects from the object image information but that it is understood that errors may be made, noise may be present, and various other factors may result in the inclusion of portions of other objects.

FIG. 2F depicts an example in which the image information is 3D image information 2700. More particularly, the 3D image information 2700 may include, e.g., a depth map or a point cloud that indicates respective depth values of various locations on one or more surfaces (e.g., top surface or other outer surface) of the objects 3410A/3410B/3410C/3410D/3550. In some implementations, an image segmentation operation for extracting image information may involve detecting image locations at which physical edges of objects appear (e.g., edges of a box) in the 3D image information 2700 and using such image locations to identify an image portion (e.g., 2730) that is limited to representing an individual object in a camera field of view (e.g., 3410A).

The respective depth values may be relative to the camera 1200 which generates the 3D image information 2700 or may be relative to some other reference point. In some embodiments, the 3D image information 2700 may include a point cloud which includes respective coordinates for various locations on structures of objects in the camera field of view (e.g., field of view 3200). In the example of FIG. 2F, the point cloud may include respective sets of coordinates that describe the location of the respective surfaces of the objects 3410A/3410B/3410C/3410D/3550. The coordinates may be 3D coordinates, such as [X Y Z] coordinates, and may have values that are relative to a camera coordinate system, or some other coordinate system. For instance, the 3D image information 2700 may include a first image portion 2710, also referred to as an image portion, that indicates respective depth values for a set of locations 2710₁-2710ₙ, which are also referred to as physical locations on a surface of the object 3410D. Further, the 3D image information 2700 may further include a second, a third, a fourth, and a fifth portion 2720, 2730, 2740, and 2750. These portions may then further indicate respective depth values for a set of locations, which may be represented by 2720₁-2720ₙ, 2730₁-2730ₙ, 2740₁-2740ₙ, and 2750₁-2750ₙ respectively. These figures are merely examples, and any number of objects with corresponding image portions may be used. Similar to as stated above, the 3D image information 2700 obtained may in some instances be a portion of a first set of 3D image information 2700 generated by the camera. In the example of FIG. 2E, if the 3D image information 2700 obtained represents an object 3410A of FIG. 3A, then the 3D image information 2700 may be narrowed as to refer to only the image portion 2710. Similar to the discussion of 2D image information 2600, an identified image portion 2710 may pertain to an individual object and may be referred to as object image information. Thus, object image information, as used herein, may include 2D and/or 3D image information.

In an embodiment, an image normalization operation may be performed by the computing system 1100 as part of obtaining the image information. The image normalization operation may involve transforming an image or an image portion generated by the camera 1200, so as to generate a transformed image or transformed image portion. For example, if the image information, which may include the 2D image information 2600, the 3D image information 2700, or a combination of the two, obtained may undergo an image normalization operation to attempt to cause the image information to be altered in viewpoint, object position, lighting condition associated with the visual description information. Such normalizations may be performed to facilitate a more accurate comparison between the image information and model (e.g., template) information. The viewpoint may refer to a pose of an object relative to the camera 1200, and/or an angle at which the camera 1200 is viewing the object when the camera 1200 generates an image representing the object. As used herein, "pose" may refer to an object location and/or orientation.

For example, the image information may be generated during an object recognition operation in which a target object is in the camera field of view 3200. The camera 1200 may generate image information that represents the target object when the target object has a specific pose relative to the camera. For instance, the target object may have a pose which causes its top surface to be perpendicular to an optical axis of the camera 1200. In such an example, the image information generated by the camera 1200 may represent a specific viewpoint, such as a top view of the target object. In some instances, when the camera 1200 is generating the image information during the object recognition operation, the image information may be generated with a particular lighting condition, such as a lighting intensity. In such instances, the image information may represent a particular lighting intensity, lighting color, or other lighting condition.

In an embodiment, the image normalization operation may involve adjusting an image or an image portion of a scene generated by the camera, so as to cause the image or image portion to better match a viewpoint and/or lighting condition associated with information of an object recognition template. The adjustment may involve transforming the image or image portion to generate a transformed image which matches at least one of an object pose or a lighting condition associated with the visual description information of the object recognition template.

The viewpoint adjustment may involve processing, warping, and/or shifting of the image of the scene so that the image represents the same viewpoint as visual description information that may be included within an object recognition template. Processing, for example, may include altering the color, contrast, or lighting of the image, warping of the scene may include changing the size, dimensions, or proportions of the image, and shifting of the image may include changing the position, orientation, or rotation of the image. In an example embodiment, processing, warping, and or/shifting may be used to alter an object in the image of the scene to have an orientation and/or a size which matches or better corresponds to the visual description information of the object recognition template. If the object recognition template describes a head-on view (e.g., top view) of some object, the image of the scene may be warped so as to also represent a head-on view of an object in the scene.

Further aspects of the object recognition and image normalization methods performed herein are described in greater detail in U.S. Application No. 16/991,510, filed August 12, 2020, and U.S. Application No. 16/991,466, filed August 12, 2020, each of which is incorporated herein by reference.

In various embodiments, the terms "computer-readable instructions" and "computer-readable program instructions" are used to describe software instructions or computer code configured to carry out various tasks and operations. In various embodiments, the term "module" refers broadly to a collection of software instructions or code configured to cause the processing circuit 1110 to perform one or more functional tasks. The modules and computer-readable instructions may be described as performing various operations or tasks when a processing circuit or other hardware component is executing the modules or computer-readable instructions.

FIGS. 3A-3B illustrate exemplary environments in which the computer-readable program instructions stored on the non-transitory computer-readable medium 1120 are utilized via the computing system 1100 to increase efficiency of object identification, detection, and retrieval operations and methods. The image information obtained by the computing system 1100 and exemplified in FIG. 3A influences the system's decision-making procedures and command outputs to a robot 3300 present within an object environment.

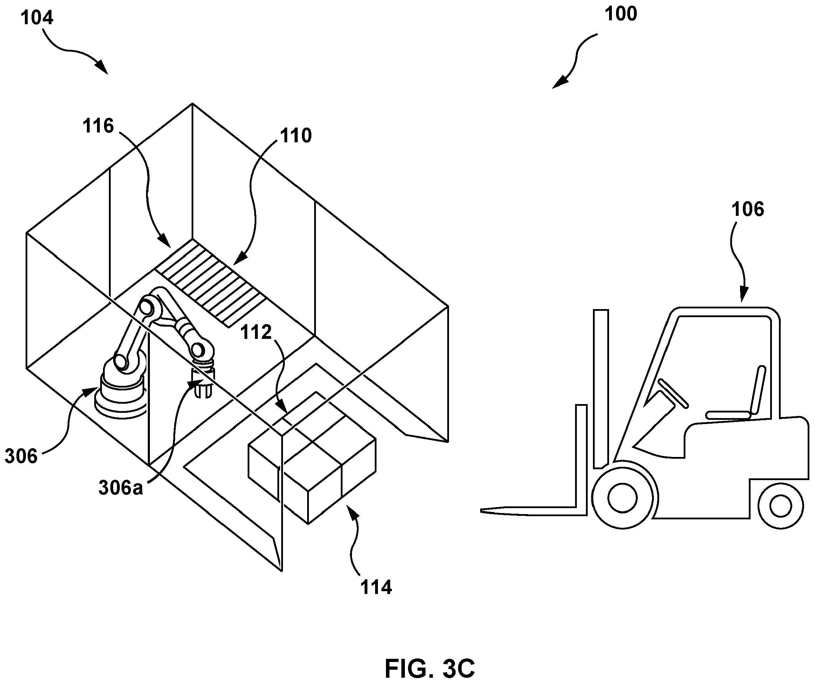

FIGS. 3A - 3B illustrate an example environment in which the process and methods described herein may be performed. FIG. 3A depicts an environment having a system 3000 (which may be an embodiment of the system 1000/1500A/1500B/1500C of FIGS. 1A-1D) that includes at least the computing system 1100, a robot 3300, and a camera 1200. The camera 1200 may be an embodiment of the camera 1200 and may be configured to generate image information which represents a scene 5013 in a camera field of view 3200 of the camera 1200, or more specifically represents objects (such as boxes) in the camera field of view 3200, such as objects 3410A, 3410B, 3410C, and 3410D. In one example, each of the objects 3410A-3410D may be, e.g., a container such as a box or crate, while the object 3400 may be, e.g., a pallet on which the containers are disposed. Further, each of the objects 3410A-3410D may further be containers containing individual objects 5012. Each object 5012 may, for example, be a rod, bar, gear, bolt, nut, screw, nail, rivet, spring, linkage, cog, or any other type of physical object, as well as assemblies of multiple objects. For purposes of this disclosure, the objects 3410A/3410B/3410C/3410D/3400 and/or individual objects 5012 described with respect to FIGs. 3A-3B, may be synonymous with the at least one target object 112 described with regard to FIGs. 3C-12 herein. FIG. 3A illustrates an embodiment including multiple containers of objects 5012 while FIG. 3B illustrates an embodiment including a single container of objects 5012.

In an embodiment, the system 3000 of FIG. 3A may include one or more light sources. The light source may be, e.g., a light emitting diode (LED), a halogen lamp, or any other light source, and may be configured to emit visible light, infrared radiation, or any other form of light toward surfaces of the objects 3410A-3410D. In some implementations, the computing system 1100 may be configured to communicate with the light source to control when the light source is activated. In other implementations, the light source may operate independently of the computing system 1100.

In an embodiment, the system 3000 may include a camera 1200 or multiple cameras 1200, including a 2D camera that is configured to generate 2D image information and a 3D camera that is configured to generate 3D image information. The camera 1200 or cameras 1200 may be mounted or affixed to the robot 3300, may be stationary within the environment, and/or may be affixed to a dedicated robotic system separate from the robot 3300 used for object manipulation, such as a robotic arm, gantry, or other automated system configured for camera movement. FIG. 3A shows an example having a stationary camera 1200 and an on-hand camera 1200, while FIG. 3B shows an example having only a stationary camera 1200. The 2D image information (e.g., a color image or a grayscale image) may describe an appearance of one or more objects, such as the objects 3410A/3410B/3410C/3410D or the object 5012 in the camera field of view 3200. For instance, the 2D image information may capture or otherwise represent visual detail disposed on respective outer surfaces (e.g., top surfaces) of the objects 3410A/3410B/3410C/3410D and 5012, and/or contours of those outer surfaces. In an embodiment, the 3D image information may describe a structure of one or more of the objects 3410A/3410B/3410C/3410D and 5012, wherein the structure for an object may also be referred to as an object structure or physical structure for the object. For example, the 3D image information may include a depth map, or more generally include depth information, which may describe respective depth values of various locations in the camera field of view 3200 relative to the camera 1200 or relative to some other reference point. The locations corresponding to the respective depth values may be locations (also referred to as physical locations) on various surfaces in the camera field of view 3200, such as locations on respective top surfaces of the objects 3410A/3410B/3410C/3410D/3400 and 5012. In some instances, the 3D image information may include a point cloud, which may include a plurality of 3D coordinates that describe various locations on one or more outer surfaces of the objects 3410A/3410B/3410C/3410D/3400 and 5012, or of some other objects in the camera field of view 3200.

In the example of FIGS. 3A and 3B, the robot 3300 (which may be an embodiment of the robot 1300) may include a robot arm 3320 having one end attached to a robot base 3310 and having another end that is attached to or is formed by an end effector apparatus 3330, such as a robot gripper. The robot base 3310 may be used for mounting the robot arm 3320, while the robot arm 3320, or more specifically the end effector apparatus 3330, may be used to interact with one or more objects in an environment of the robot 3300. The interaction (also referred to as robot interaction) may include, e.g., gripping or otherwise picking up at least one of the objects 3410A-3410D and 5012. For example, the robot interaction may be part of an object picking operation to identify, detect, and retrieve the objects 5012 from containers. The end effector apparatus 3330 may have suction cups or other components for grasping or grabbing the object 5012. The end effector apparatus 3330 may be configured, using a suction cup or other grasping component, to grasp or grab an object through contact with a single face or surface of the object, for example, via a top face.

The robot 3300 may further include additional sensors configured to obtain information used to implement the tasks, such as for manipulating the structural members and/or for transporting the robotic units. The sensors can include devices configured to detect or measure one or more physical properties of the robot 3300 (e.g., a state, a condition, and/or a location of one or more structural members/joints thereof) and/or of a surrounding environment. Some examples of the sensors can include accelerometers, gyroscopes, force sensors, strain gauges, tactile sensors, torque sensors, position encoders, etc.

FIG. 3C is an illustration of an example environment in which a robotic system 100 with a coordinated transfer mechanism may operate. The features of the robotic system 100 may be examples of the components of the above discussed systems 1000, 1500A, 1500B, 1500C, and 3000. The environment can be any location with objects that require interaction with or movement via the robotic system 100, e.g., a warehouse, a manufacturing plant, a retail space, or other premises. In embodiments, the objects may include boxes, bins, crates, or any other container presented with or without a pallet. Alternatively, the objects may include individual pieces presented within a box, bin crate, or container, where each individual piece may be interacted with via the robotic system 100 (such as in a piece picking operation). The robotic system 100 can include and/or communicate with one or more units (e.g., robot arms or robots 306, transport unit 106, transfer unit cell 104, or any other systems external to the transfer unit cell 104) configured to execute one or more tasks. Aspects of the coordinated transfer mechanism can be practiced or implemented by the various units. FIG. 3C illustrates one transfer unit cell 104 comprising a robot 306 and one transport unit 106 (represented as a forklift) for example purposes only. In embodiments, the robot arm 306 may be an example of any of the robotic arms discussed above with respect to FIGS. 1A-3B.

For the example illustrated in FIG. 3C, the example environment in which the robotic system 100 operates may include a transfer unit cell 104 (e.g., a robot cell or enclosed environment that can include a robot configured for palletizing/depalletizing and/or piece picking operations), a transport unit or vehicle 106 (e.g., a conveyor, an automated guided vehicle (AGV), an autonomous mobile robot (AMR), a fork lift, a shelf-transport robot, etc. for moving the transfer unit cell 104 within the environment), a start/source location 114 accessible by the robotic system 100 and containing at least one target object 112, a task/destination location 116 for placement of the at least one target object 112 via the robotic system 100, or a combination thereof. Details of the transfer unit cell 104 will be described in further detail herein. Each of the robots 306 in the robotic system 100 can be configured to execute one or more tasks. The tasks can be combined in sequence to perform an operation that achieves a goal, such as to load or unload objects from the start/source location 114 (such as a truck, a van, or a pallet for storage in a warehouse, from a conveyor system 310 feeding objects in a queue, or to load or unload objects from storage locations and prepare them for storage or shipping). In some embodiments, the task can include placing the at least one target object 112 on the task/destination location 116 by the robot 306 (e.g., on top of a pallet, inside a bin/cagelbox/case, and/or on a conveyor unit). The robotic system 100 can derive individual placement locations/orientations, calculate corresponding motion plans, or a combination thereof for placing and/or stacking the at least one target object 112. Each of the units can be configured to execute a sequence of actions (e.g., operating one or more components therein) to execute a task.

In some embodiments, the task can include manipulation (e.g., moving and/or reorienting) of the at least one target object 112 (e.g., one of the packages, boxes, cases, cages, pallets, or individual objects, etc. corresponding to the executing task). For example, the task can be palletizing or depalletizing the at least one target object 112 from the start/source location 114 to the task/destination location 116. In an example of the task of palletizing, an unloading unit (not shown; e.g., a devanning robot) can be configured to transfer the at least one target object 112 from a location in a carrier (e.g., a truck) to a location on a conveyor 110, which may be integral with the transfer unit cell 104 as further described herein. Further, the transfer unit cell 104 can be configured to transfer the at least one target object 112 from one location (e.g., the conveyor, a pallet, or a bin) to another location (e.g., a pallet, a bin, etc.). The transfer unit cell 104 can be configured to transfer the at least one target object 112 from the start/source location 114 to the task/destination location 116.

In some embodiments, the task can be depalletizing the pallet containing the at least one target object 112. For example, the transport unit or vehicle 106 can transport a pallet loaded with the at least one target object 112 to the transfer unit cell 104 which can be configured to transfer the at least one target object 112 from the pallet to another location (e.g., another pallet, a bin, a conveyor, etc.). In further embodiments, the task may include any type of robotic picking or placing task.

For illustrative purposes, the robotic system 100 is described in the context of a packaging and/or shipping center; however, it is understood that the robotic system 100 can be configured to execute tasks in other environments/for other purposes, such as for manufacturing, assembly, storage/stocking, healthcare, and/or other types of automation. It is also understood that the robotic system 100 can include other units, such as manipulators, service robots, modular robots, etc., not shown in FIG. 3C. For example, in some embodiments, the robotic system 100 can include a depalletizing unit for transferring the objects from cage carts or pallets onto conveyors or other pallets, a container-switching unit for transferring the objects from one container to another, a packaging unit for wrapping/casing the objects, a sorting unit for grouping objects according to one or more characteristics thereof, a piece-picking unit for manipulating (e.g., for sorting, grouping, and/or transferring) the objects differently according to one or more characteristics thereof, or a combination thereof.

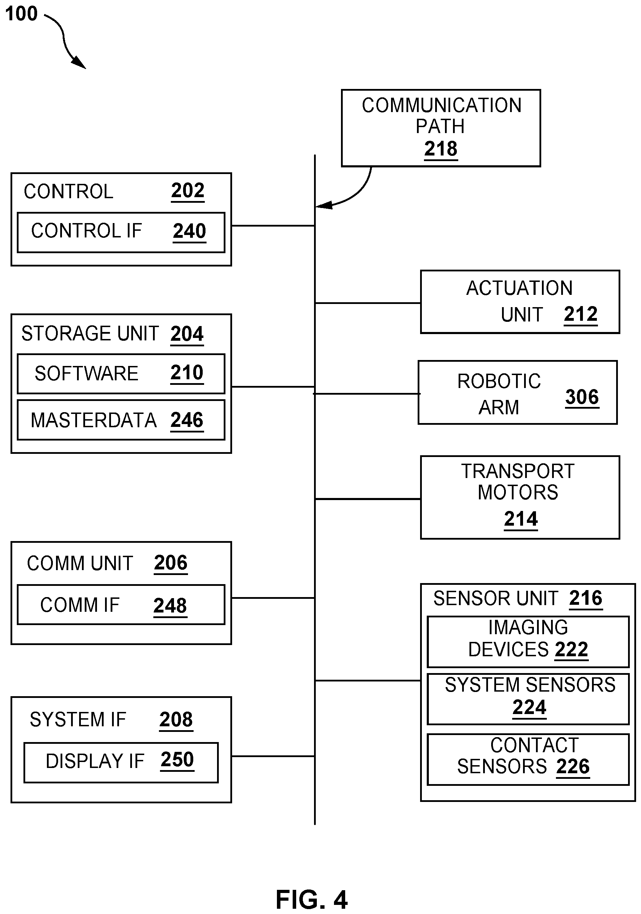

FIG. 4 is a block diagram illustrating aspects of the robotic system 100 which may be included with the transfer unit cell 104 in accordance with one or more embodiments of the present technology. In some embodiments, for example, the robotic system 100 (e.g., at one or more of the units and/or robots described above) may include electronic/electrical devices, such as one or more control units/processors 202, one or more storage units 204, one or more communication units 206, one or more system interfaces/input-output devices 208, one or more actuation units 212, one or more transport motors 214, one or more sensor units/sensors 216, or a combination thereof. The various devices can be coupled to, or otherwise communicate with each other via wire connections and/or wireless connections, represented as communication path 218 in FIG. 4. For example, the robotic system 100 can include a bus, such as a system bus, a Peripheral Component Interconnect (PCI) bus or PCI-Express bus, a HyperTransport or industry standard architecture (ISA) bus, a small computer system interface (SCSI) bus, a universal serial bus (USB), an IIC (I2C) bus, or an Institute of Electrical and Electronics Engineers (IEEE) standard 1394 bus (also referred to as "Firewire"). Further, for example, the robotic system 100 can include bridges, adapters, processors, or other signal-related devices for providing the wire connections between the devices. The wireless connections can be based on, for example, cellular communication protocols (e.g., 3G, 4G, LTE, 5G, etc.), wireless local area network (LAN) protocols (e.g., wireless fidelity (Wi-Fi)), peer-to-peer or device-to-device communication protocols (e.g., Bluetooth, Near-Field communication (NFC), etc.), Internet of Things (IoT) protocols (e.g., NB-IoT, LTE-M, etc.), and/or other wireless communication protocols. For purposes of this application, any of the systems 1000/1500A/1500B/1500C/1100/1100A/1100B/3000/100 (or their components) previously described may be integrated with the transfer unit cell 104 as further described herein.

The control units or processors 202 can include data processors (e.g., central processing units (CPUs), special-purpose computers, and/or onboard servers) configured to execute instructions (e.g., software instructions) stored on the storage units 204 (e.g., computer memory). The control units or processors 202 may include a control interface 240 for interaction via an end user. In some embodiments, the control units 202 can be included in a separate/stand-alone controller that is operably coupled to the other electronic/electrical devices illustrated in FIG. 4 and/or the robotic units illustrated in FIG. 3A-3C. The control units 202 can implement the program instructions to control/interface with other devices, thereby causing the robotic system 100 to execute actions, tasks, and/or operations. The program instructions may further be implemented via user interaction with the control interface 240. The control units 202 may be implemented by any of the computing systems discussed herein.

The storage units 204 can include non-transitory computer-readable mediums having stored thereon program instructions (e.g., software). Some examples of the storage units 204 can include volatile memory (e.g., cache and/or random-access memory (RAM)) and/or non-volatile memory (e.g., flash memory and/or magnetic disk drives). Other examples of the storage units 204 can include portable memory and/or cloud storage devices. The storage units 204 may be implemented by any of the computer-readable media discussed herein.

In some embodiments, the storage units 204 can be used to further store and provide access to processing results and/or predetermined data/thresholds. For example, the storage units 204 can store master data 246 that includes descriptions of objects (e.g., boxes, cases, and/or products) that may be manipulated by the robotic system 100. In one or more embodiments, the master data 246 can include a dimension, a shape (e.g., templates for potential poses and/or computer-generated models for recognizing the object in different poses), a color scheme, an image, identification information (e.g., bar codes, quick response (QR) codes, logos, etc., and/or expected locations thereof), an expected weight, other physical/visual characteristics, or a combination thereof for the objects expected to be manipulated by the robotic system 100. In some embodiments, the master data 246 can include manipulation-related information regarding the objects, such as a center-of-mass (CoM) location on each of the objects, expected sensor measurements (e.g., for force, torque, pressure, and/or contact measurements) corresponding to one or more actions/maneuvers, or a combination thereof.

The communication units 206 can include circuits configured to communicate with external or remote devices via a network. For example, the communication units 206 can include receivers, transmitters, modulators/demodulators (modems), signal detectors, signal encoders/decoders, connector ports, network cards, etc. The communication units 206 can be configured to send, receive, and/or process electrical signals according to one or more communication protocols (e.g., the Internet Protocol (IP), wireless communication protocols, etc.). The communication units 206 may further include a communication interface 248 for interaction with via an end user for said sending, receiving, and/or processing of electrical signals according to said one or more communication protocols. In some embodiments, the robotic system 100 can use the communication units 206 to exchange information between units of the robotic system 100 and/or exchange information (e.g., for reporting, data gathering, analyzing, and/or troubleshooting purposes) with systems or devices external to the robotic system 100.

The system interfaces 208 can include user interface devices such as a display interface 250 configured to communicate information to and/or receive information from human operators. For example, the system interfaces 208 can include a display 210 and/or other output devices (e.g., a speaker, a haptics circuit, or a tactile feedback device, etc.) for communicating information to the human operator. Further, the system interfaces 208 can include control or receiving devices, such as a keyboard, a mouse, a touchscreen, a microphone, a user interface (UI) sensor (e.g., a camera for receiving motion commands), a wearable input device, etc. In some embodiments, the robotic system 100 can use the system interfaces 208 to interact with the human operators in executing an action, a task, an operation, or a combination thereof.

The robot or robotic arm 306 (which may be an example of the robot 3300) of the robotic system 100 may include physical or structural members (e.g., robotic manipulator arms) that are connected at joints for motion (e.g., rotational and/or translational displacements). The structural members and the joints can form a kinetic chain configured to manipulate an end-effector (e.g., the gripper) configured to execute one or more tasks (e.g., gripping, spinning, welding, etc.) depending on the use/operation of the robotic system 100. The robot or robotic arm 360 may include a distal end 306a with an end of arm tool or end effector apparatus 544 disposed thereon. The end effector apparatus 544 may be configured for interacting with the at least one target object 112. The robotic system 100 can include the actuation unit 212 (e.g., motors, actuators, wires, artificial muscles, electroactive polymers, etc.) configured to drive or manipulate (e.g., displace and/or reorient) the structural members about or at a corresponding joint. In some embodiments, the robotic system 100 can include the transport motors 214 configured to transport the corresponding units/chassis from place to place.

The robotic system 100 can include the sensor units 216 configured to obtain information used to implement the tasks, such as for manipulating the structural members and/or for transporting the robotic units. The sensor units 216 can include devices configured to detect or measure one or more physical properties of the robotic system 100 (e.g., a state, a condition, and/or a location of one or more structural members/joints thereof) and/or of a surrounding environment. Some examples of the sensor units 216 can include accelerometers, gyroscopes, force sensors, strain gauges, tactile sensors, torque sensors, position encoders, etc.

In some embodiments, for example, the sensor units 216 can include one or more imaging devices 222 (e.g., visual and/or infrared cameras, 2D and/or 3D imaging cameras, distance measuring devices such as lidars or radars, etc.) configured to detect the surrounding environment. The imaging devices 222 can generate representations of the detected environment, such as digital images and/or point clouds, that may be processed via machine/computer vision (e.g., for automatic inspection, robot guidance, or other robotic applications). As described in further detail above, the robotic system 100 (via, e.g., the control units 202) can process the digital image and/or the point cloud to identify the at least one target object 112 of FIG. 3C, the start/source location 114 of FIG. 3C, the task/destination location 116 of FIG. 3C, a pose of the at least one target object 112, a confidence measure regarding the start/source location 114 and/or the pose, or a combination thereof.

For manipulating the at least one target object 112, the robotic system 100 (via, e.g., the various circuits/devices described above) can capture and analyze image data of a designated area (e.g., a pickup location, such as inside the truck or on the conveyor belt) to identify the at least one target object 112 and the start/source location 114 thereof. Similarly, the robotic system 100 can capture and analyze image data of another designated area (e.g., a drop location for placing objects on the conveyor, a location for placing objects inside the container, or a location on the pallet for stacking purposes) to identify the task/destination location 116. For example, the imaging devices 222 can include one or more cameras configured to generate image data of the pickup area and/or one or more cameras configured to generate image data of the task area (e.g., drop area). Based on the image data, as described below, the robotic system 100 can determine the start/source location 114, the task/destination location 116, the associated poses, a packing/placement location, and/or other processing results.

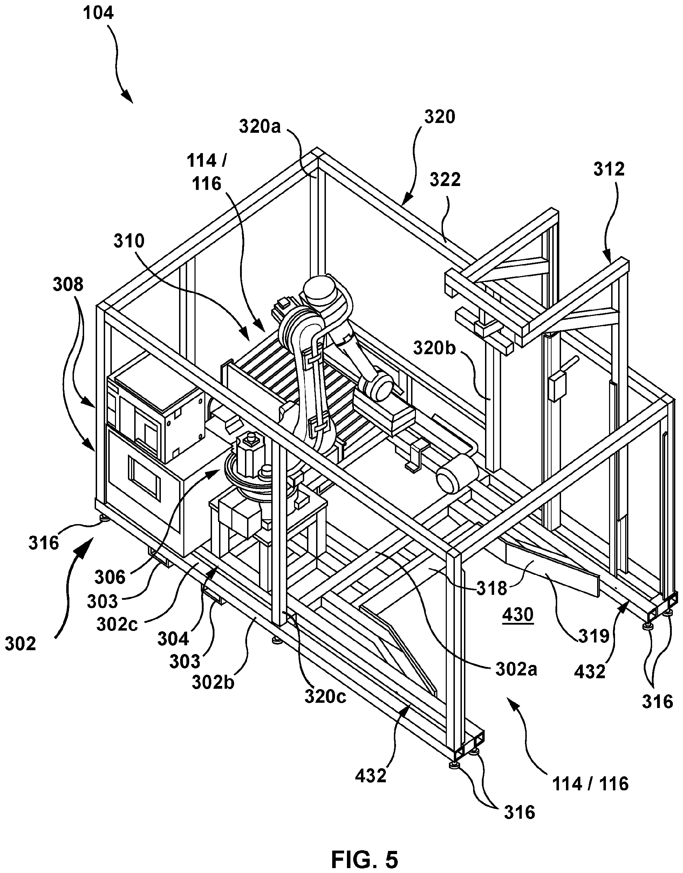

In some embodiments, for example, the sensor units 216 can include position sensors 224 (e.g., position encoders, potentiometers, etc.) configured to detect positions of structural members (e.g., the robotic arms and/or the end-effectors) and/or corresponding joints of the robotic system 100. The robotic system 100 can use the position sensors 224 to track locations and/or orientations of the structural members and/or the joints during execution of the task. The robotic system 100 can include the transfer unit cell 104. As illustrated in FIG. 5 below, the transfer unit cell 104 is a robot cell for transfer of objects that may integrate the robotic system 100 as illustrated in FIG. 4.

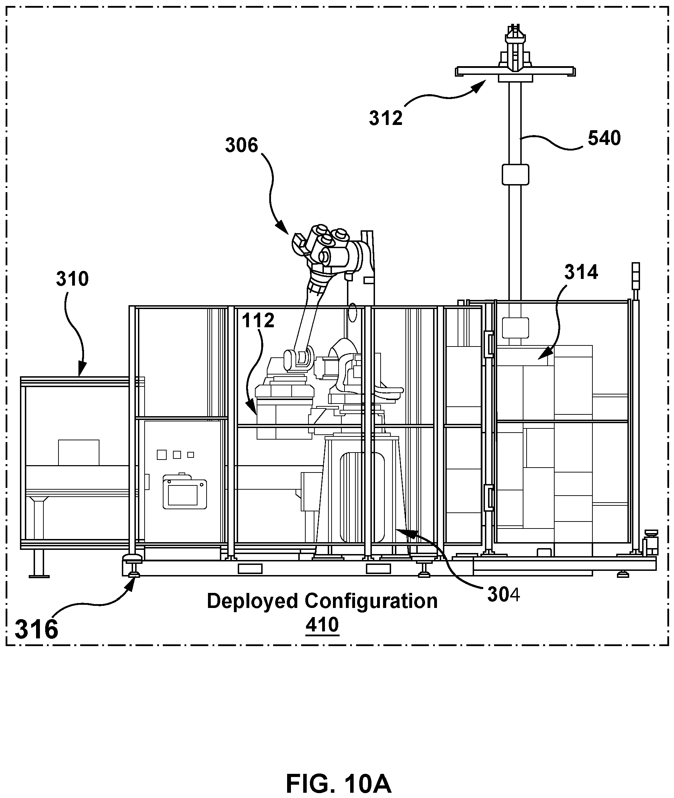

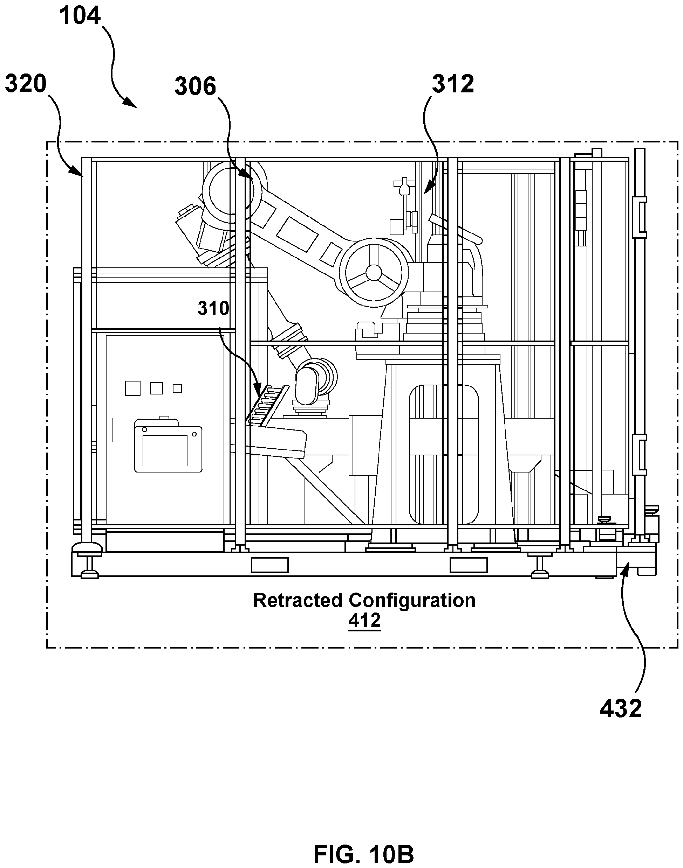

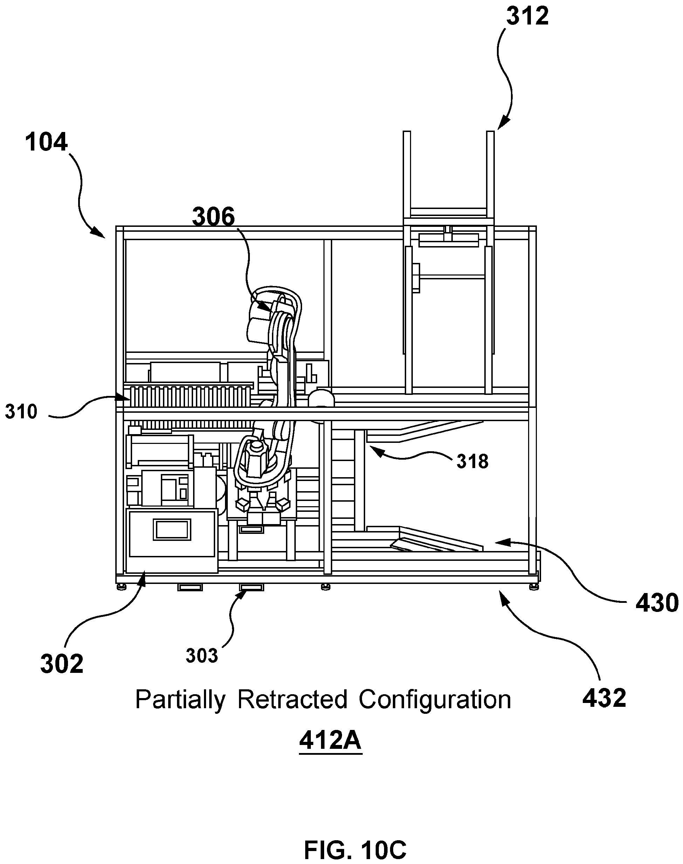

FIG. 5 illustrates a transfer unit cell consistent with embodiments hereof. In some embodiments, the transfer unit cell 104 may be a portable self-contained robot cell for receiving and transferring objects. The transfer unit cell 104 may be in communication with a control system 308 and may be translatable between a deployed configuration 410 (as further described with respect to FIG. 10A herein) configured to receive and secure the start/source location 114 (e.g., a pallet containing the at least one target object 112) within the transfer unit cell 104, and a retracted configuration 412 (as further described with respect to FIG. 10B herein) wherein the transfer unit cell 104 is retracted into itself. In embodiments, the transfer unit cell 104 may be translatable to a partially retracted configuration 412A (as further described with respect to FIG. 10C herein), wherein the transfer unit cell 104 is at least partially retracted into itself, as described in further detail herein. As illustrated further in FIGs. 5-9B, the transfer unit cell 104 may include a cell base plate 302, a robotic arm mount 304 configured for receiving the robot or robotic arm 306 having an end effector apparatus 544, the control system 308, a conveyor system 310 configured for receiving the at least one target object 112 (or providing the at least one target object 112, in embodiments), a sensor mount 540 configured for receiving a sensor system 312 including a sensor array 542, and a unit enclosure 320 mounted to the cell base plate 302 of the transfer unit cell 104 to facilitate transport of the transfer unit cell 104, which will be described in detail below.

The cell base plate 302 may be a substantially level (i.e., within a five degree angle, of the horizontal axis, or top planar surface, of the cell base plate 302) structure or platform having a flat surface composed of metal (e.g., steel, aluminum, etc.) or any other material (e.g., carbon fiber) or combination of materials sufficient to support the robot 306, conveyor system 310, sensor mount 540, control system 308, unit enclosure 320, and any other features, and to maintain its structural integrity during translation of the transfer unit cell 104 between deployed, retracted, and transport configurations 410, 412, and 414 respectively, and during robotic system 100 operations. The cell base plate 302 may be formed in any parallelepiped shape where the top surface 302c includes a planar surface having an area sufficient to contain or mount thereon the robotic arm mount 304, the robot or robotic arm 306, the control system 308, the conveyor system 310, the sensor mount 540, and/or the unit enclosure 320.

Vertically oriented sides or edges 302a of the cell base plate 302 can include openings/pockets 303 configured for receiving the tines of a fork lift or other transport unit 106 to enable lifting of and transport of the transfer unit cell 104. The openings/pockets 303 may be positioned around the center of gravity of the transfer unit cell 104 to maximize stability when transporting/moving the transfer unit cell 104. The openings/pockets 303 may be slots disposed on the edges 302a of the cell base plate 302 formed of any material sufficient to maintain integrity while the tines of the fork lift insert and lift the transfer unit cell 104. Alternatively, the fork lift may lift and transport the transfer unit cell 104 by sliding its tines underneath the cell base plate 302.

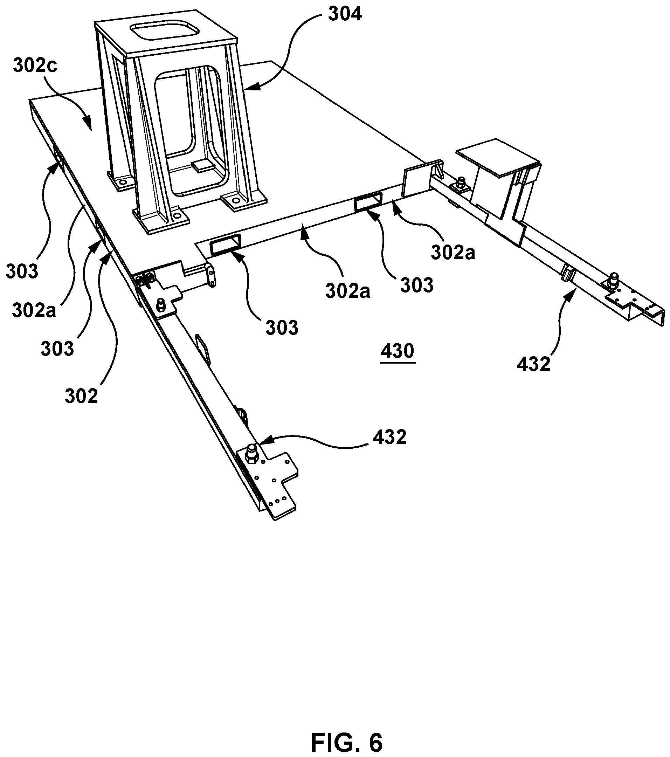

As illustrated in FIG. 6, in embodiments, the cell base plate 302 includes base extensions 432, which may be posts composed of metal or any other material sufficient to facilitate balance of the transfer unit cell 104 during robotic system 100 operations. The base extensions 432 may extend from an edge 302a of the cell base plate 302. Each base extension 432 may extend in a manner substantially parallel (i.e., within a 5 degree angle) to an additional edge 302a of the cell base plate 302. In embodiments, the base extensions 432 may be substantially parallel to one another. The base extensions 432 may define a container placement area 430 between each post of the base extensions 432, such that the base extensions 432 at least partially define the border of the container placement area 430, which may serve as the start/source location 114 to receive and position containers for objects such as pallets, carts, racks or the like, in embodiments.

The base extensions 432 are formed or configured to provide stability and/or balance to support the transfer unit cell 104 while the transfer unit cell 104 is in the deployed configuration 410 (also exemplified in FIG. 10A) and or during operation or motion of the robot or robot arm 306. The base extensions 432 may further be detachable or otherwise movable from the edge 302a of the cell base plate 302 to reduce a footprint of the transfer unit cell 104 while in the retracted configuration 412 and/or transport configuration 414 for transport and/or storage. For example, the base extensions 432 may be hingedly connected to the edge 302a of the cell base plate 302 and configured to fold toward the cell base plate 302 to reduce a footprint of the transfer unit cell while in the retracted configuration 412. Alternatively, the base extensions 432 may be configured to retract into the cell base plate 302, either thru manual interactions (e.g., pushing the base extensions 432 into the cell base plate 302) or automated interactions (e.g., electrically powered pulley system or track system).

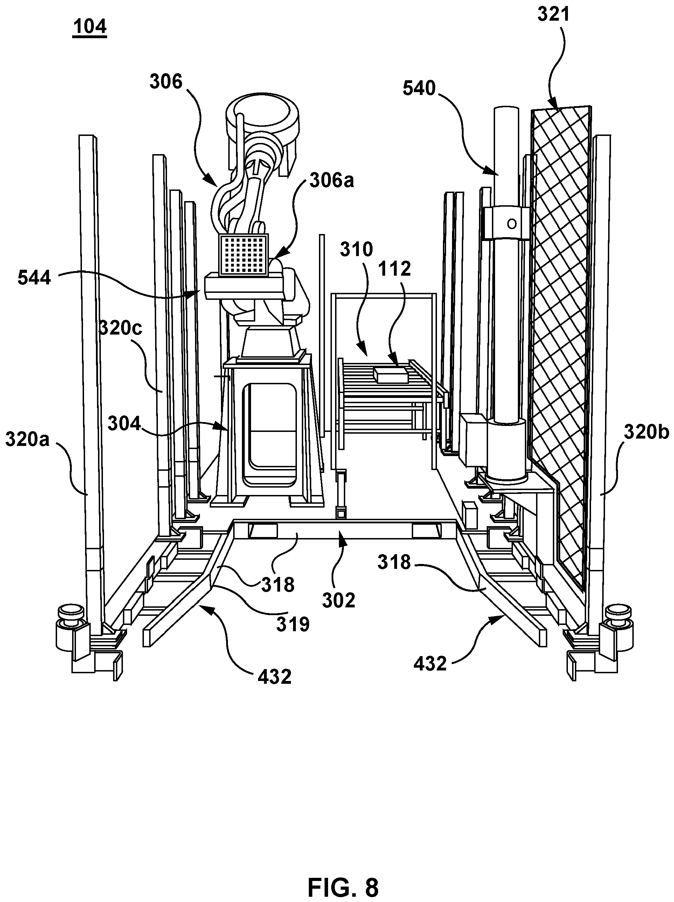

The cell base plate 302 may further include payload guide 319 defined by at least one rail 318, as shown in FIGS. 5 and 8. The payload guide 319 may be separable from, or integral with, the base extensions 432 and/or the base plate edge 302a, such that the payload guide 319 may be formed from the same material as the base plate 302 and/or base extensions 432 (i.e., metal, or any other sufficient material). The payload guide 319 may be configured to guide, secure, and/or center any containers and/or objects such as pallets, carts, racks, or the like as they are moved into the container placement area 430. The payload guide 319 may include two rails 318 having angled portions to provide a funnel-fike zone to assist in guiding a payload into the container placement area 430. The payload guide 319 may have a third rail 318 positioned adjacent to an edge 302a of the cell base plate 302.

In embodiments, the cell base plate 302 and/or the base extensions 432 include anchorless support features 316 which may include one or more friction-increasing components extending from a bottom surface 302b of the cell base plate 302 and/or the base extensions 432. More particularly, the anchorless support features 316 may include rubber pads/feet, suction cups, magnets, adhesive strips, or any other material comprising a rough surface. By using the anchorless support features 316, the transfer unit cell 104 does not require securing to the facility floor via bolts or anchoring mechanisms. The anchorless support features 316 of the transfer unit cell 104 can therefore enable immediate deployment of the transfer unit cell 104.

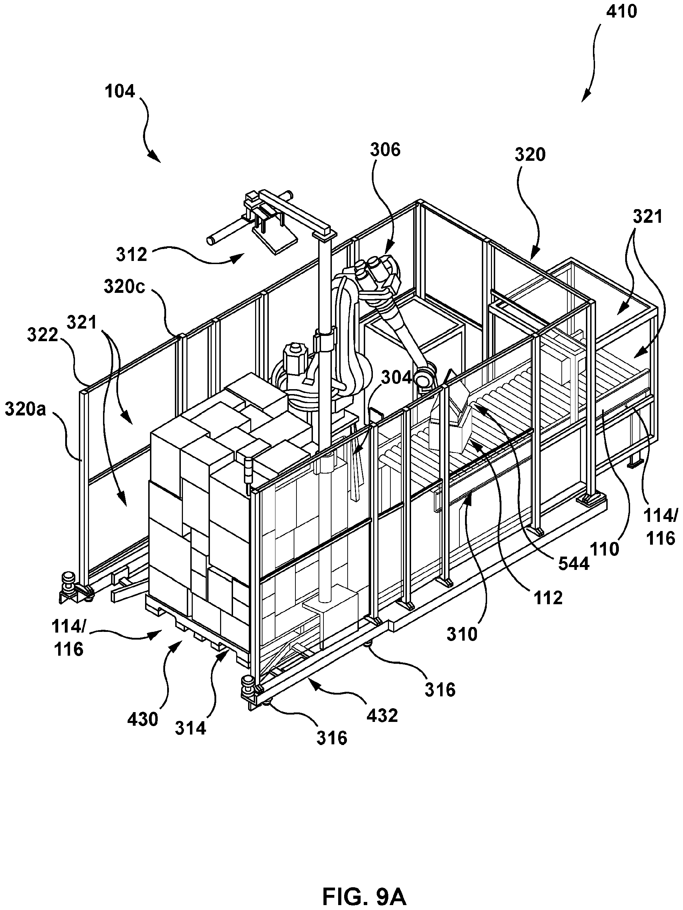

The unit enclosure 320, aspects of which are illustrated in FIGS. 8-9B, may include a frame surrounding the transfer unit cell 104 composed of a plurality of posts 320a, 320b, 320c, etc. extending substantially (i.e., within 5 degrees) perpendicularly from the cell base plate 302. The posts 320a, 320b, 320c may be joined together by beams 322 at top portions thereof (as shown in FIG. 5). In some embodiments, the posts 320a, 320b, 320c, etc. may be arranged at angles to the cell base plate 302. The unit enclosure 320 may further include a fence structure 321 attached to and disposed between each of the vertical posts 320a, 320b, 320c, etc., such that the fence structure 321 includes separable portions moveable to expose or cover portions of the transfer unit cell, as shown in FIG. 9A. The fence structure 321 may include portions or panels that may be moved or repositioned to expose and cover portions of the transfer unit cell 104, such as the conveyor system 310. The fence structure 321 may be a mesh, plastic, wire, chain link, or sheet panel structure sized and dimensioned to fit between the plurality of vertical posts 320a, 320b, 320c, etc. configured to enclose the robotic arm mount 304, robot or robotic arm 306, and/or at least one target object 112 located in the container placement area 430, start/source location 114, or task/destination location 116 according to the embodiments described herein. In embodiments, a portion of the fence structure 321 portion adjacent to the conveyor 110 of the conveyor system 310 may include a slot or opening to accommodate the conveyor extending past the perimeter of the unit enclosure 320, as discussed further below.

As illustrated in FIGs. 3C, 5, and 8-9B, the conveyor system 310 of the transfer unit cell 104 includes a conveyor 110 or a dynamic platform (i.e., a closed loop carrying system such as a closed loop conveyor belt connected to two or more pulleys to facilitate movement of the closed loop belt), which may be mounted to the cell base plate 302 and configured to be extendable beyond an edge or outside of a perimeter of the cell base plate 302. Alternatively, the conveyor system 310 may include a gravity-fed platform (i.e., an angled/inclined platform comprising a low-friction surface, rollers, or any other type of spinning/rolling structure having a radial structure) or ramp. In general, the conveyor system 310 may be any system configured for the translation of objects placed thereon from one end of the conveyor system 310 to the opposite end of the conveyor system 310.

The conveyor system 310 may be configured to translate or move the at least one target object 112 received thereon to a location or position outside of the unit enclosure 320 of the transfer unit cell 104. The conveyor 110 or dynamic platform of the conveyor system 310 is configured for the movement of the at least one target object 112 received from the robot or robotic arm 306 along its length, e.g., in the direction of movement facilitated by the two or more pulleys. The conveyor system 310 may further serve as the task/destination location 116 configured for placement of the at least one target object 112 by the robot 306 while employing the methods or operations further described herein. In embodiments, the conveyor system 310 may instead be configured to translate or move the at least one target object 112 received thereon to a location or position inside of the unit enclosure 320 of the transfer unit cell 104. The conveyor 110 or dynamic platform of the conveyor system 310 is configured for the movement of the at least one target object 112 received from an outside source along its length, e.g., in the direction of movement facilitated by the two or more pulleys. The conveyor system may further serve as the start/source location 114 configured for providing the at least one target object 112 to the robotic system 100 for interaction with via the robot 306 while employing the methods or operations further described herein.

The robotic arm mount 304, illustrated, e.g., in FIGS. 5-6, may be a stool-like or box shaped structure, frame, or raised platform having a substantially (i.e., within a five degree angle of the plane of the top surface 302c) flat surface extending from a top surface 302c of the cell base plate 302, and may be composed of any material sufficient to support the weight of the robot or robotic arm 306, such as steel or other structural metals. The surface of the robotic arm mount 304 may be substantially parallel to the planar surface of the top surface 302c of the base plate. The robotic arm mount 304 may be positioned along a side or off-center on the top surface 302c of the cell base plate 302 to accommodate for clearance for motion of the robotic arm 306. The robotic arm mount 304 may be positioned to allow for unimpeded movement of the robot or robotic arm 306 within an operational area defined by the inside volume of the transfer unit cell 104 (i.e., a product of the length of the cell base plate 302 plus the base extensions 432, the width of the cell base plate 302 along base plate edge 302a, and the height of the unit enclosure 320). The robot or robot arm 306 itself may translate to its full extended length defined by the radius of the extended length of the robot or robot arm 306 from the robots base to the robot distal end 306a. The robot or robot arm 306 may therefore be capable of extending outside of the operation area defined by the volume of the transfer unit cell 104 in scenarios where robot 306 interaction with objects outside of the transfer unit cell 104 is desired. In embodiments, the robotic arm mount 304 may be integral with (i.e., molded with, welded onto, or otherwise formed on) the cell base plate 302. Alternatively, the robotic arm mount 304 may be secured to the cell base plate 302 via industrial adhesives, bolts, screws, rivets, and the like. In embodiments, the robot or robot arm 306 may be supplied with the transfer unit cell 104, or may alternatively be supplied by an end user. Thus, the robotic arm mount 304 may be configured as a universal mount for the robot or robot arm 306, or for the sensor system 312, as further described below.

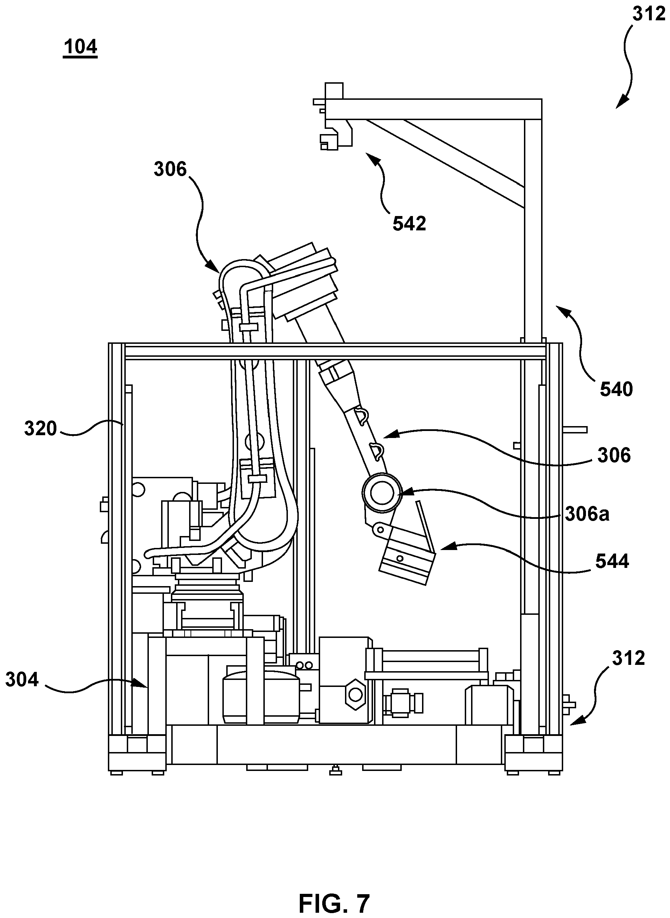

The robotic arm 306 may include an end effector apparatus 544 having appendages configured for grabbing, grasping, picking, or otherwise interacting with the at least one target object 112, the end effector apparatus 544 being disposed at a distal end of the robot or robotic arm 306. The end effector apparatus 544 may be a tool configured for manipulating objects. For example, the end effector apparatus 544 may be any form of gripper, such as hand or claw-based gripper or a vacuum or suction-based gripper. FIGs. 7 and 8 illustrate the end effector apparatus 544 as having a single gripping surface, although it is understood that the end effector apparatus 544 can have more than one gripping surface, such as having an L-shaped configuration configured for gripping objects from the top surface and a vertical surface (i.e., side surface).

The transfer unit cell 104 further includes a sensor system 312. FIG. 7 illustrates an example of the sensor system 312, which may be a combination of various sensor hardware, software, and corresponding components configured to generate image information and/or communicate data to the robotic system 100 as previously described herein with respect to FIG. 4. The sensor system 312 may include a sensor array 542 attached to a sensor mount 540. The sensor array 542 may be any combination of sensors and/or peripheral devices configured for detection of objects, such as two dimensional cameras, three dimensional cameras, scanners, lighting arrays, or the like. The sensor mount 540 may be a solid post or structure, or a pair of solid posts or structures, comprising attachment structures to secure the sensor array 542 thereto, and may further be attachable to the cell base plate 302 or to the unit enclosure 320. The sensor mount 540 may further be adjustable, i.e., translatable along its vertical axis, to increase or decrease in height. For example, the sensor mount 540 may be retracted to decrease its height to below that of the top of the unit enclosure 320 (i.e., the vertical axis peak of the unit enclosure 320) to facilitate transport of the transfer unit cell 104 while in the retracted configuration 412 or transport configuration 414. Correspondingly, the sensor mount 540 may be extended to increase its height to a position that allows for a desired sensor field of view for the sensor array 542. Optionally, the sensor mount 540 may include mechanisms or be structured so as to adjust the horizontal position of the sensor array 542 (i.e., along its horizontal axis). As illustrated in FIGs. 5 and 7, the transfer unit cell 104 is shown including the sensor system 312 positioned over the container placement area 430 or start/source location 114 (or in embodiments, the task/destination location 116); however it is understood that the transfer unit cell 104 can include the sensor system 312 positioned over the conveyor system 310 (which, in embodiments, may simultaneously serve as the start/source location 114 or task/destination location 116), either as an alternative placement or in combination. In embodiments, the sensor system 312 may be supplied with the transfer unit cell 104, or may alternatively be supplied by an end user. Thus, the sensor mount 540 may be configured as a universal mount for the robot or robot arm 306, or for the sensor system 312.

In some embodiments, the control system 308 may include the systems and elements described in FIG. 4 (or any other computing system described herein) above for control of components and systems within the transfer unit cell 104 such as the conveyor system 310, the sensor system 312 (which may include the sensing unit 216 and relative components, i.e., imaging devices 222, system sensors 224, and contact sensors 226, as previously described herein with respect to the robotic system 100 exemplified in FIG. 4), and the robot 306, and communication with systems external to the transfer unit cell, such as a warehouse management system (not shown) configured for coordination with the transport unit or vehicle 106 of FIG. 3C, and any other units configured to provide or move objects within the environment for interaction with via the robotic system 100 (not shown). The control system 308 may provide the intelligence for the transfer unit cell 104, including generating detection results from sensor information received via the sensor system 312 and/or motion planning for grasping, transporting, and placement of the at least one target object 112. The control system 308 may include physical and electrical control systems, such as power supply and circuitry for the components in the transfer unit cell 104, air/gas/vacuum/pneumatic systems, and other systems to enable self-sufficient operation. For example, the control system 308 may include an air source (e.g. an air compressor and vacuum blower), wireless network connection and support, and/or control logic and component integration. The integration of physical and electrical control systems into the control system 308 provides the benefit of removing reliance on the deployment facility.

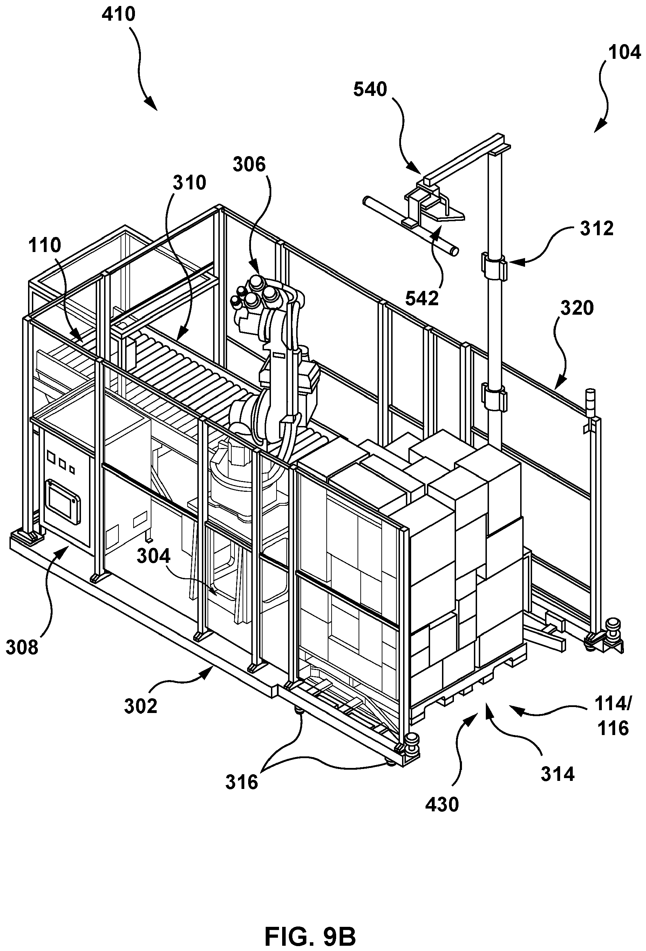

FIGs. 9A and 9B illustrate views during operation of the transfer unit cell 104 in a deployed configuration or deployed configuration 410, wherein the transfer unit cell 104 (which may incorporate the features of robotic system 100 as exemplified in FIG. 4) is in position to interact with and transfer objects from the start/source location 114 (e.g., the container placement area 430 or the conveyor 110 of the conveyor system 310 according to embodiments) to the task/destination location 116 (e.g., the other of the container placement area 430 or the conveyor 110 of the conveyor system 310 according to embodiments). When in the deployed configuration 410, the transfer unit cell 104 may be secured in place via the anchorless support features 316 as previously described herein. For example, FIGs. 9A and 9B depict a pallet located at the container placement area 430 (serving as the start/source location 114) with objects stacked thereon. In a depalletizing operation where the pallet is located in the start/source location 114, the robot or robotic arm 306 can transfer at least one target object 112 from the pallet or the container placement area 430 to the conveyor 110 of the conveyor system 310 (i.e., the task/destination location 116). Alternatively, in a palletizing operation, the robot or robotic arm 306 can transfer at least one target object 112 from the conveyor 110 or conveyor system 310 (i.e., the start/source location 114) to a pallet located in the container placement area 430 or in the task/destination location 116.

FIG. 10A illustrates another example of the transfer unit cell 104 in the deployed configuration 410 as previously described herein, while FIG. 10B is an example of transfer unit cell 104 in a retracted configuration 412. In the retracted configuration 412, the elements and structures of the transfer unit cell 104 may be retracted into the transfer unit cell 104 and/or the transfer unit cell 104 may be retracted into itself. "Retracted into the transfer unit cell" or "retracted into itself' may refer to the transfer unit cell 104 being configured such that no elements or features extend higher than the posts 320a, 320b, 320c of the unit enclosure 320 and such that the overall footprint of the transfer unit cell 104 is reduced to within 20%, within 10%, within 5%, or within 2% of the footprint of the cell base plate 302 as defined by the area of the top surface 302c of the cell base plate 302. To accomplish retraction, the base extensions 432 may be retracted such that the overall footprint of the transfer unit cell 104 is reduced to within 10%, within 5%, or withing 2% of the footprint of the cell base plate 302 as defined by the area of the top surface 302c of the cell base plate 302. The base extensions 432 are folded or otherwise retracted toward the edge 302a of the cell base plate 302 or removed from the cell base plate 302 entirely to reduce the footprint of the transfer unit cell 104. Further, in the retracted configuration 412, the conveyor system 310 is retracted into the unit enclosure 320, the sensor system 312 is retracted to a position below the top of the unit enclosure 320 via the sensor mount 540 (i.e., below its peak vertical axis as previously described herein), and the robot 306 is positioned such that it does not extend above the unit enclosure 320. In the retracted configuration 412, the beams 322 may be removed, partially removed, or realigned to permit the retraction of the base extensions 432.

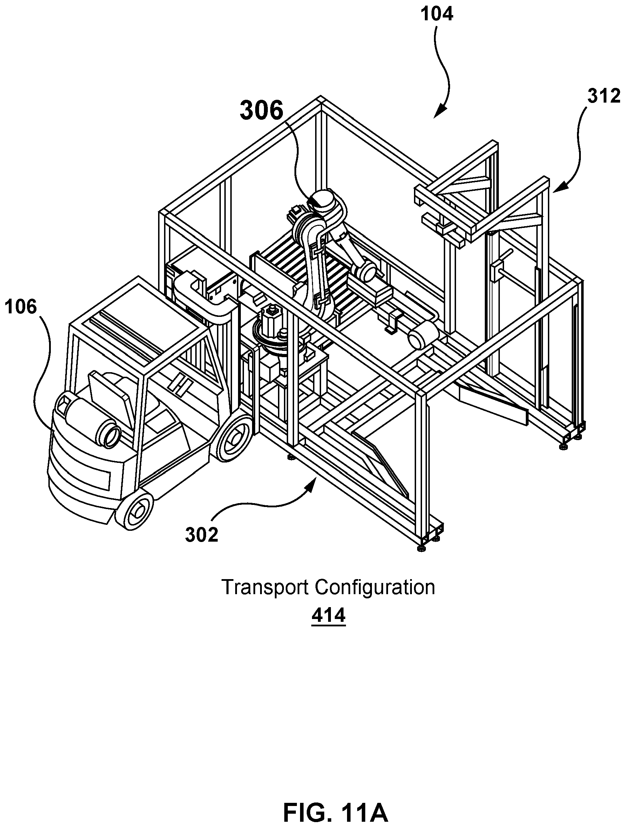

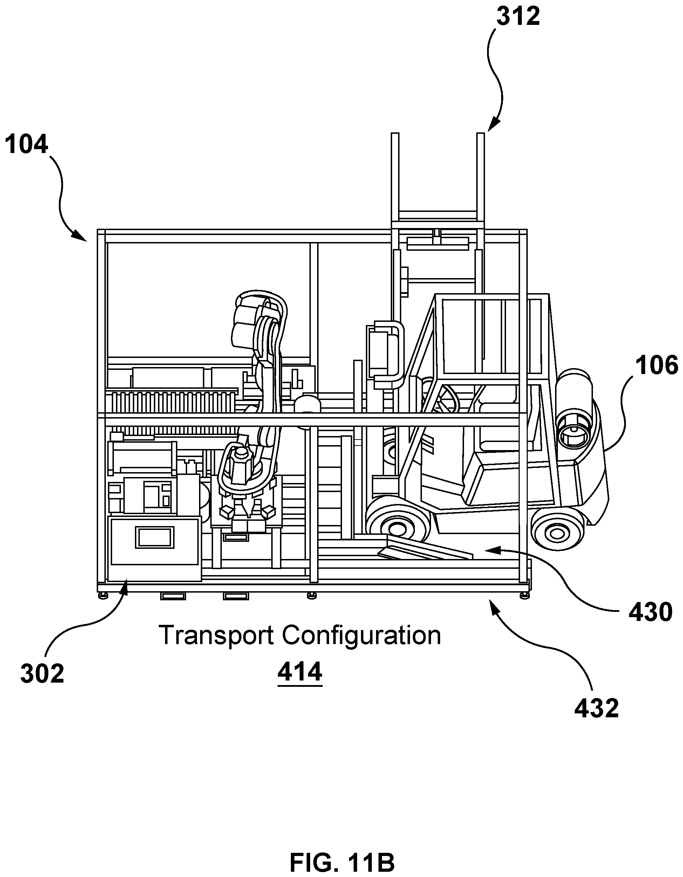

In embodiments, while in the retracted configuration 412, the transfer unit cell 104 may further be interacted with via the transport unit 106 to configure the transfer unit cell 104 to a transport configuration 414 which allows for the portability and rapid deployment and integration of the transfer unit cell 104 around the environment to another location where the transfer unit cell 104 may be re-configured into the deployed configuration 410, and/or into a storage space as previously described herein, and further described with respect to Figs. 11A and 11B.

In embodiments, the transfer unit cell 104 may be in a partially retracted configuration 412A, as illustrated in FIG. 10C, wherein the conveyor system 310 is retracted into and covered by the unit enclosure 320, but the sensor system 312 still extends beyond the top of the unit enclosure 320, and the base extensions 432 are still attached to or extending from the cell base plate 302. In embodiments, the partially retracted configuration 412A may include partial retraction of only some of the components of the transfer unit cell 104 in any additional combination (not shown), such that less than all of the conveyor system 310, sensor system 312, and base extensions 432 are retracted into or removed from the unit enclosure 320. The partially retracted configuration 412A illustrated in FIG. 10C is thus meant to merely be an example of one possible scenario where the transfer unit cell 104 is partially retracted into itself, and is not meant to be interpreted as the sole embodiment of the partially retracted configuration 412A. The partially retracted configuration 412A may be useful in scenarios where the transfer unit cell 104 requires rapid transport from one location to another within the environment, and the time saved from not retracting all of the conveyor system 310, sensor system 312, and base extensions 432 is desired.

FIGs. 11A and 11B illustrate the transfer unit cell 104 in the transport configuration 414, in which the transfer unit cell 104 is loaded onto the transport unit 106 (exemplified as a forklift in FIGs. 11A and 11B). The transport configuration 414 may refer to the transfer unit cell 104 being in the retracted configuration 412 or partially retracted configuration 412A and loaded onto the transport unit 106 for transfer. The transport configuration 414 may be achieved when the transfer unit cell 104 is at least partially retracted into itself, and is being interacted with by the transport unit 106 (e.g., a forklift has its tines in the openings 303 of the cell base plate 302 and has lifted the transfer unit cell 104 off the ground to move it around the environment). Although optimal safety and stability for transport of the transfer unit cell 104 may occur when the transfer unit cell 104 is in the fully retracted configuration 412 as described above and exemplified in FIG. 10B, in some embodiments, the transfer unit cell 104 may be transferred or moved in the partially retracted configuration 412A (as exemplified in FIG. 10C), for example, with the conveyor system 310 not being retracted into or covered by the unit enclosure 320, with the sensor system 312 not being retracted into a position below the top of the unit enclosure 320 (i.e., below its peak vertical axis), and/or with the base extensions not being folded in or removed from the cell base plate 302. In the example illustrated in FIGs. 11A and 11B, the transfer unit cell 104 is in the transport configuration 414 while the transfer unit cell is in the partially retracted configuration 412A as shown in FIG. 10C, because the sensor system 312 and base extensions 432 are not fully retracted into the transfer unit cell 104.

FIGs. 11A and 11B further depict multiple ways the transfer unit cell 104 may be transported around the environment in the transport configuration 414. For example, FIG. 11A shows the transfer unit cell 104 being picked up by the transport unit 106 (in this example, a forklift) on the outside of the cell base plate 302 by inserting the tines of the forklift into the openings 303 located on the edge of the cell base plate 302 (as shown and described with respect to FIG. 6). Alternatively, FIG. 11B shows the transfer unit cell 104 being picked up by the transport unit 106 (in this example, a forklift) on the inside of the cell base plate 302, mainly, by inserting the tines of the forklift into the openings 303 located between the base extensions 432 (within the container placement area 430, as shown and described with respect to FIG. 6). Still other transport configurations 414 are possible though not necessarily depicted within the figures, as the transport unit 106 can pick up and move the transfer unit cell 104 via the base plate 302 on any available side of the base plate 302. In still further embodiments, the transport unit 106 may include an AGV or AMR configured to move the transfer unit cell 104.

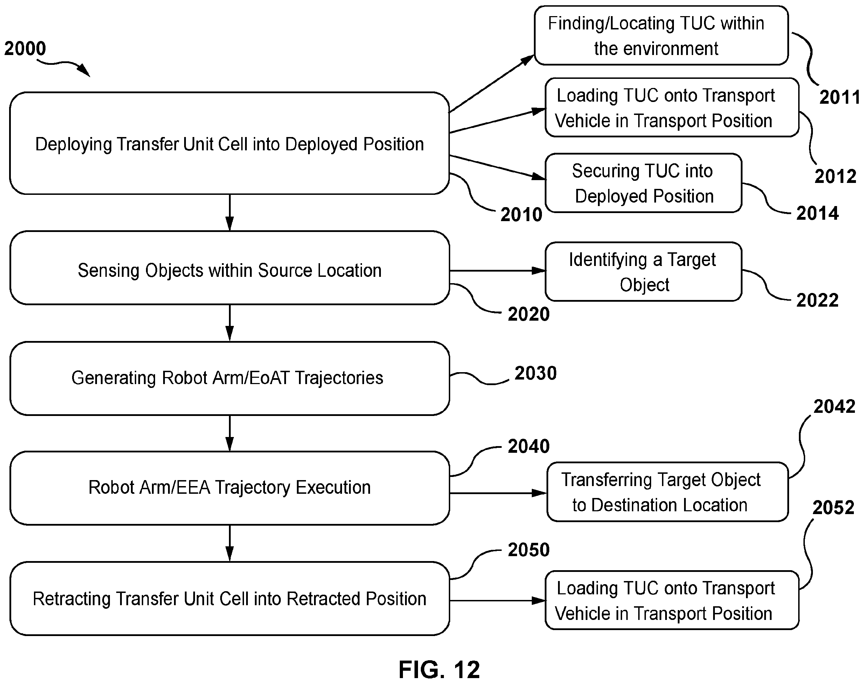

FIG. 12 provides a flow diagram illustrating an overall flow of method 2000 and operations 2010/2020/2030/2040/2050 for the rapid deployment and integration of a robotic system 100. The method 2000 of rapid deployment and integration of the robotic system may include any combination of features of the sub-methods and operations described herein. The method may include any or all of a deployment operation 2010, a sensing operation 2020, a trajectory generation operation 2030, a trajectory execution operation 2040, and a retraction operation 2050. The deployment operation 2010 may be the first steps in the method 2000. The sensing operation 2020, trajectory generation operation 2030, and trajectory execution operation 2040, may provide further steps and be performed multiple times during the method 2000. The retraction operation 2050 may be the last step in the method 2000 after the sensing operation 2020, trajectory generation operation 2030, and trajectory execution operation 2040 are completed. The sensing operation 2020, trajectory generation operation 2030, and trajectory execution operation 2040 may each be performed in the context of robotic operation for detecting, identifying, retrieving, and transporting the at least one target object 112 from the start/source location 114. In embodiments, the method 2000 may include communicating with systems external to the transfer unit cell 104 (such as a warehouse management system, for example) during any of the operations 2010/2020/2030/2040/2050 described in greater detail below.

In the deployment operation 2010, the method 2000 may first include a finding/locating step 2011 for locating the transfer unit cell 104 within the environment so as to initiate a loading step 2012, and a deploying/securing step 2014 of the transfer unit cell 104 having the cell base plate 302 into the deployed configuration 410, where, while in the deployed configuration 410, the transfer unit cell 104 and/or robotic system 100 is configured to receive and secure a pallet containing a plurality of objects.

Locating or finding the transfer unit cell 104 may include determining the location of the transfer unit cell 104 within the environment, such as a warehouse. The transfer unit cell 104 may be located by remote tracking or identification procedures (such as GPS), communicated to the robotic system 100 via the communication units 206, for example. Locating the transfer unit cell 104 may further include automatically controlling, or manually driving, the transport unit 106 to the known location of the transfer unit cell 104 after the location of the transfer unit cell 104 within the environment is identified. The loading step 2012 may include loading the transfer unit cell 104 onto the transport vehicle or the transport unit 106 for transport in the transport configuration 414 to a desired location (i.e., the start/source location 114).

In embodiments, loading the transfer unit cell 104 onto the transport unit 106 into the transport configuration 414 may include receiving or lifting the cell base plate 302 via tines of a fork lift received in the openings/pockets of the cell base plate 302, as previously described herein. Alternatively, loading the transfer unit cell 104 onto the transport unit 106 may include receiving the transfer unit cell 104 on a conveyor, an automated guided vehicle (AGV), an autonomous mobile robot (AMR), or any other type of dynamic structure capable of moving the transfer unit cell 104 around the environment to the start/source location 114.

The deploying/securing step 2014 of the deployment operation 2010 may include, positioning, lowering and/or securing the transfer unit cell 104 into a desired position in the deployed configuration 410 such that the transfer unit cell 104 is stabilized to support the transfer unit cell 104 during robotic system 100 operations. In embodiments, securing the transfer unit cell 104 in the deployed configuration 410 may include securing or stabilizing the transfer unit cell 104 using the anchorless support features 316 as previously described herein. As discussed above, the anchorless support features 316 may have friction-inducing properties that prevent sliding, shifting, or general displacement of the transfer unit cell 104 during operation.

In the sensing operation 2020, the method 2000 may include sensing or detecting the at least one target object 112 among the plurality of objects contained on the pallet or start/source location 114 via the sensor system 312 as previously described herein with respect to FIGs. 2D-3C. In embodiments, the sensing operation 2020 may include a target identification step 2022 that may include identifying the at least one target object 112 within the start/source location 114 (such as a pallet, a conveyor, a specified area on the warehouse floor, etc.). The target identification step 2022 may utilize any embodiment of the obtaining image information procedures previously described herein with respect to the systems 1000/1500A/1500B/1500C/1100/1100A/1100B/3000/100. In embodiments of the sensing operation 2020, sensing the at least one target object 112 within the start/source location 114 may include the sensor system 312 having the sensor array 542 attached to the sensor mount 540 of the transfer unit cell 104 as previously described herein. The sensor mount 540 may have any combination of sensors and/or peripheral devices for detection of the at least one target object 112, such as two dimensional cameras, three dimensional cameras, scanners, lighting arrays, or the like mounted thereon. The sensor mount 540 may further be adjusted along its vertical axis to a position for optimal sensing of the at least one target object 112 within the start/source location 114, as previously described herein.

In the trajectory generation operation 2030, the method 2000 may include calculating a planned trajectory of the robot arm or robot 306 and/or the end effector apparatus 544. Calculating the planned trajectory may include determining a trajectory path of the robot arm or robot 306 and/or the end effector apparatus 544 toward the start/source location 114 and/or the at least one target object 112. For example, the robotic system 100 may identify the start/source location 114 as the container placement area 314, which may include a pallet containing the at least one target object 112, or a stack or pile of at least one target object 112. In embodiments, the start/source location 114 may be identified by the robotic system 100 as the conveyor system 310. For example, the robotic system 100 may identify the start/source location 114 as the conveyor 110 of the conveyor system 310, which could present the at least one target object 112 in a queue while the conveyor moves the at least one target object 112 along its length in a direction toward or within the transfer unit cell 104. In calculating the planned trajectory, the robotic system 100 may further calculate a trajectory of the end effector apparatus 544 toward the at least one target object 112 once the robot arm or robot 306 and/or the end effector apparatus 544 are within the vicinity of the start/source location 114. The robotic system 100 may further calculate an approach trajectory of the end effector apparatus 544 toward the at least one target object 112 identified by the robotic system 100 for interaction. Calculating the approach trajectory may further include calculating a grip of the end effector apparatus 544 for picking, grasping, or otherwise interacting with the at least one target object 112.

In embodiments, the trajectory generation operation 2030 may include calculating a return trajectory of the robot arm or robot 306 and/or the end effector apparatus 544 from the start/source location 114 to the task/destination location 116 once the at least one target object 112 is picked, grasped, or otherwise interacted with via the end effector apparatus 544. For example, calculating the return trajectory of the robot arm or robot 306 and/or the end effector apparatus 544 may include determining a trajectory toward the conveyor system 310 serving as the task/destination location 116, from the container placement area 430 serving as the start/source location 114. The calculated return trajectory may include a trajectory path ending adjacent to the conveyor 110 of the conveyor system 310. Calculating the return trajectory may further include determining a trajectory of the robot arm or robot 306 that avoids collision with the other components of the transfer unit cell 104, such as the unit enclosure 320, the sensor system 312, the conveyor system, 310, the cell base plate 302, and/or any other related components as described herein. In other words, calculating the return trajectory may include determining a trajectory within the operational area defined by the inside volume of the transfer unit cell 104 (i.e., a product of the length of the cell base plate 302 plus the base extensions 432, the width of the cell base plate 302 along base plate edge 302a, and the height of the unit enclosure 320). The calculated return trajectory may further include releasing the at least one target object 112 via the end effector apparatus 544 once the robot arm or robot 306 and/or the end effector apparatus 544 are adjacent to the conveyor 110. In embodiments, calculating the return trajectory of the robot arm or robot 306 and/or the end effector apparatus 544 may include determining a trajectory toward the container placement area 430 serving as the task/destination location 116, from the conveyor system 310 serving as the start/source location 114. The calculated return trajectory may include a trajectory path ending adjacent to the container placement area 430 or a pallet disposed within the container placement area 430. The calculated return trajectory may further include releasing the at least one target object 112 via the end effector apparatus 544 once the robot arm or robot 306 and/or the end effector apparatus 544 are adjacent to the container placement area 430. In still other embodiments, the trajectory generation operation 2030 may include calculating a planned trajectory of the robot arm or robot 306 and/or the end effector apparatus 544 toward the start/source location 114, calculating an approach trajectory of the end effector apparatus 544 toward the at least one target object 112 once the robot arm or robot 306 and/or the end effector apparatus 544 are in the vicinity of the start/source location 114, calculating a return trajectory of the robot arm or robot 306 and/or the end effector apparatus 544 toward the task/destination location 116, and calculating release of the at least one target object 112 once the end effector apparatus 544 holding the at least one target object 112 is within the vicinity or adjacent to the task/destination location 116.

In the trajectory execution operation 2040, the method 2000 may include controlling the robot arm or robot 306 and/or the end effector apparatus 544 of the transfer unit cell 104 toward the start/source location 114 to interact with the at least one target object 112 sensed from among the plurality of objects contained on the start/source location 114, as determined during the trajectory generation operation 2030. The method 2000 may include controlling the robot arm or robot 306 and/or the end effector apparatus 544 within the transfer unit cell 104 toward the container placement area 314 serving as the start/source location 114, which may include the pallet containing the at least one target object 112. In embodiments, the method may include controlling the robot arm or robot 306 and/or the end effector apparatus 544 within the transfer unit cell 104 toward the conveyor system 310 serving as the start/source location 114 containing the at least one target object 112. The trajectory execution operation 2040 may further include controlling the end effector apparatus 544 within the start/source location 114 to pick, grasp, or otherwise interact with the at least one target object 112 identified by the robotic system 100 for transfer to the source/destination location 116. The trajectory execution operation 2040 may further include a transferring step 2042 for transferring the at least one target object 112 via the robot arm or robot 306 and/or the end effector apparatus 544 from the start/source location 114 to the source/destination location 116, as determined by the trajectory generation operation 2030. For example, the robot arm or robot 306 and/or the end effector apparatus 544 may transfer the at least one target object 112 from the container placement area 314, or from a pallet containing the at least one target object 112 within the container placement area 314, to the conveyor system 310 of the transfer unit cell 104.

In the retraction operation 2050, the method 2000 may include retracting the transfer unit cell 104 into the retracted configuration 412 wherein the transfer unit cell 104 is retracted into itself, as previously described herein. Retracting the transfer unit cell 104 into the retracted configuration 412 may include retracting the conveyor system 310, the cell base plate 302, and/or the sensor mount 540 into the transfer unit cell 104, as previously described herein. While in the retracted configuration 412, the transfer unit cell 104 may further be configurable into the transport configuration 414 which allows for the portability and rapid deployment and integration of the transfer unit cell 104. In the retracted configuration 412, the conveyor system 310 is retracted into and covered by the unit enclosure 320, the sensor system 312 is retracted to a position below the top of the unit enclosure 320 (i.e., below its peak vertical axis as previously described herein), and/or the base extensions 432 are folded into the edge 302a of the cell base plate 302 or removed from the cell base plate 302 entirely. The retraction operation 2050 may further include a loading step 2052 which includes translating the transfer unit cell 104 from the retracted configuration 412 into the transport configuration 414, where the retracted transfer unit cell 104 is interacted with or loaded onto the transport unit 106 as previously described herein to move the transfer unit cell within the environment. More particularly, the transport unit 106 may move the transfer unit cell 104 to another container placement area 314 for further execution of the method 2000 described herein. Alternatively, the transport unit 106 may move the transfer unit cell 104 to a storage area or storage position once all operations of the method 2000 described herein are complete, or there are no further objects within the environment for interaction with via the robotic system 100.

In general, the method 2000 described herein may be used for the rapid deployment and integration of a robotic system for the manipulation (e.g., moving and/or reorienting) of a target object (e.g., one of the packages, boxes, cases, cages, pallets, etc. corresponding to the executing task) from a start/source location to a task/destination location. For example, a transport unit (e.g., a forklift) may be configured to transport a transfer unit cell comprising the robotic system from one location to the start/source location (e.g., in a warehouse). The transfer unit cell can then be extended into a deployed configuration configured for robotic system interaction with the target objects in the start/source location. The robotic system may be configured to transfer the target object from the start/source location (e.g., a conveyor, a pallet, a container placement area, or a bin) to a task/destination location (e.g., a conveyor, a pallet, a container placement area, or a bin etc.). In completing the operation, the transfer unit cell may be retracted into a retracted or compacted position ready for further transport via the transport unit to another start/source location, or to a storage location. Details regarding the task and the associated actions are described above.

The above Detailed Description of examples of the disclosed technology is not intended to be exhaustive or to limit the disclosed technology to the precise form disclosed above. While specific examples for the disclosed technology are described above for illustrative purposes, various equivalent modifications are possible within the scope of the disclosed technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub-combinations. Each of these processes or blocks may be implemented in a variety of different ways. Further, while processes or blocks are at times shown as being performed in series, these processes or blocks may instead be performed or implemented in parallel, or may be performed at different times. Further, any specific numbers noted herein are only examples; alternative implementations may employ differing values or ranges.

These and other changes may be made to the disclosed technology in light of the above Detailed Description. While the Detailed Description describes certain examples of the disclosed technology as well as the best mode contemplated, the disclosed technology may be practiced in many ways, no matter how detailed the above description appears in text. Details of the system may vary considerably in its specific implementation, while still being encompassed by the technology disclosed herein. As noted above, particular terminology used when describing certain features or aspects of the disclosed technology should not be taken to imply that the terminology is being redefined herein to be restricted to any specific characteristics, features, or aspects of the disclosed technology with which that terminology is associated. Accordingly, the invention is not limited, except as by the appended claims. In general, the terms used in the following claims should not be construed to limit the disclosed technology to the specific examples disclosed in the specification, unless the above Detailed Description section explicitly defines such terms.

It will be apparent to one of ordinary skill in the relevant arts that other suitable modifications and adaptations to the methods and applications described herein may be made without departing from the scope of any of the embodiments. The embodiments described above are illustrative examples and it should not be construed that the present disclosure is limited to these particular embodiments. It should be understood that various embodiments disclosed herein may be combined in different combinations than the combinations specifically presented in the description and accompanying drawings. It should also be understood that, depending on the example, certain acts or events of any of the processes or methods described herein may be performed in a different sequence, may be added, merged, or left out altogether (e.g., all described acts or events may not be necessary to carry out the methods or processes). In addition, while certain features of embodiments hereof are described as being performed by a single component, module, or unit for purposes of clarity, it should be understood that the features and functions described herein may be performed by any combination of components, units, or modules. Thus, various changes and modifications may be affected by one skilled in the art without departing from the spirit or scope of the invention as defined in the appended claims.

Further embodiments include:
Embodiment 1. A robotic system, comprising: a control system; a transfer unit cell for the transfer of objects, the transfer unit cell being in communication with the control system and translatable between a deployed configuration configured to receive a pallet within the transfer unit cell, and a retracted configuration wherein the transfer unit cell is retracted into itself, the transfer unit cell further including: a cell base plate; a robotic arm mount on the cell base plate for attachment of a robotic arm; a conveyor system, adjacent the robotic arm mount, for receiving a target object; a sensor mount attached to the cell base plate for a sensor system including a sensor array; and a unit enclosure mounted to the cell base plate of the transfer unit cell to facilitate transport of the transfer unit cell, and translation of the transfer unit cell between the deployed configuration and the retracted configuration.
Embodiment 2. The robotic system of embodiment 1 wherein the retracted configuration of the transfer unit cell includes the conveyor system, the cell base plate, and the sensor mount being retracted into the transfer unit cell.
Embodiment 3. The robotic system of embodiment 1, wherein the cell base plate includes base extensions extending from an edge of the cell base plate and forming a container placement area between the base extensions, the base extensions formed to provide stability and/or balance to support the transfer unit cell while in the deployed configuration.
Embodiment 4. The robotic system of embodiment 3, wherein the base extensions are detachable from the edge of the cell base plate to reduce a footprint of the transfer unit cell while in the retracted configuration.
Embodiment 5. The robotic system of embodiment 3, wherein the base extensions are hingedly connected to the edge of the cell base plate to permit folding of the base extensions toward the cell base plate to reduce a footprint of the transfer unit cell while in the retracted configuration.
Embodiment 6. The robotic system of embodiment 1, wherein the cell base plate includes anchorless support features including one or more friction increasing components extending from a bottom surface of the cell base plate.
Embodiment 7. The robotic system of embodiment 1, wherein the robotic arm further includes a distal end with an end effector apparatus disposed thereon, the end effector apparatus configured for interacting with the target object.
Embodiment 8. The robotic system of embodiment 1, wherein the conveyor system is mounted to the cell base plate and is extendable beyond an edge of the cell base plate, the conveyor system further including a dynamic platform for movement of the target object received from the robotic arm.
Embodiment 9. The robotic system of embodiment 1, wherein the unit enclosure further includes: a frame surrounding the transfer unit cell, the frame including vertical posts extending substantially perpendicularly from the cell base plate, and a fence attached to and between each of the vertical posts, such that the fence includes separable portions moveable to expose or cover portions of the transfer unit cell.
Embodiment 10. A transfer unit cell for deployment of a robotic system, the transfer unit cell comprising: a cell base plate for the transfer of objects, the transfer unit cell being translatable between a deployed configuration configured to receive and secure a pallet, and a retracted configuration wherein the transfer unit cell is retracted into itself; a robotic arm mount for receiving a robotic arm; a conveyor system for receiving a target object; a sensor mount for receiving a sensor system including a sensor array; and a unit enclosure mounted to the cell base plate to facilitate transport of the transfer unit cell, and translation of the transfer unit cell between the deployed configuration and the retracted configuration.
Embodiment 11. The transfer unit cell of embodiment 10, wherein the cell base plate further includes base extensions extending from an edge of the cell base plate and forming a container placement area between the base extensions, the base extensions configured to provide stability and/or balance to support the transfer unit cell during operation and motion of the robotic arm while in the deployed configuration.
Embodiment 12. The transfer unit cell of embodiment 11, wherein the base extensions are detachable from the edge of the cell base plate to reduce a footprint of the transfer unit cell while in the retracted configuration.
Embodiment 13. The transfer unit cell of embodiment 11, wherein the base extensions are hingedly connected to the edge of the cell base plate to permit the base extensions to fold toward the cell base plate to reduce a footprint of the transfer unit cell while in the retracted configuration.
Embodiment 14. The transfer unit cell of embodiment 10, wherein the cell base plate further provides anchorless support features including one or more friction-increasing components extending from a bottom surface of the cell base plate.
Embodiment 15. The transfer unit cell of embodiment 10, wherein the conveyor system is mounted to the cell base plate and is extendable beyond an edge of the cell base plate, the conveyor system further including a dynamic platform for movement of the target object received from the robotic arm.
Embodiment 16. The transfer unit cell of embodiment 10, wherein the sensor array includes any combination of two-dimensional cameras, three-dimensional cameras, scanners, and/or lighting arrays.
Embodiment 17. The transfer unit cell of embodiment 10, wherein the unit enclosure includes a frame surrounding the transfer unit cell, the frame including vertical posts extending perpendicularly from the cell base plate, and the unit enclosure further includes a fence attached to and between each of the vertical posts, such that the fence includes separable portions moveable to expose or cover portions of the transfer unit cell.
Embodiment 18. A method for rapid deployment and integration of a robotic system, comprising: locating and deploying a transfer unit cell having a cell base plate into a deployed configuration configured to receive and secure a pallet, containing a plurality of objects; securing the transfer unit cell in the deployed configuration such that the transfer unit cell is stabilized to support the transfer unit cell; sensing the plurality of objects contained on the pallet via a sensor system including a sensor array attached to a sensor mount of the transfer unit cell; controlling a robotic arm of the transfer unit cell to interact with a target object sensed from among the plurality of objects contained on the pallet; and transferring the target object from the pallet to a conveyor system of the transfer unit cell.
Embodiment 19. The method of embodiment 18 further comprising: loading the transfer unit cell having a cell base plate onto a transport vehicle in a transport configuration; and deploying the transfer unit cell into the deployed configuration.
Embodiment 20. The method of embodiment 18, further comprising: retracting the transfer unit cell into a retracted configuration wherein the transfer unit cell is retracted into itself; translating the transfer unit cell from the retracted configuration into a transport configuration; and moving the transfer unit cell via a transport vehicle.
Embodiment 21. The method of embodiment 18 further comprising controlling the robotic arm of the transfer unit cell, and communicating with systems external to the transfer unit cell.

## Claims

1. A robotic system, comprising:
a control system;
a transfer unit cell for the transfer of objects, the transfer unit cell being in communication with the control system and translatable between a deployed configuration configured to receive a pallet within the transfer unit cell, and a retracted configuration wherein the transfer unit cell is retracted into itself, the transfer unit cell further including:
a cell base plate;
a robotic arm mount positioned on the cell base plate for attachment of a robotic arm;
a conveyor system positioned on the cell base plate and adjacent the robotic arm mount for receiving a target object;
a sensor mount attached to the cell base plate for a sensor system including a sensor array; and
a unit enclosure mounted to the cell base plate of the transfer unit cell to facilitate transport of the transfer unit cell, and translation of the transfer unit cell between the deployed configuration and the retracted configuration.

2. The robotic system of claim 1 wherein the retracted configuration of the transfer unit cell includes the conveyor system, the cell base plate, and the sensor mount being retracted into the transfer unit cell.

3. The robotic system of claim 1 or 2, wherein the cell base plate includes base extensions extending from an edge of the cell base plate and forming a container placement area between the base extensions, the base extensions formed to provide stability and/or balance to support the transfer unit cell while in the deployed configuration.

4. The robotic system of claim 3, wherein the base extensions are detachable from the edge of the cell base plate to reduce a footprint of the transfer unit cell while in the retracted configuration or wherein the base extensions are hingedly connected to the edge of the cell base plate to permit folding of the base extensions toward the cell base plate to reduce a footprint of the transfer unit cell while in the retracted configuration.

5. The robotic system of any one of the preceding claims, wherein the cell base plate includes anchorless support features including one or more friction increasing components extending from a bottom surface of the cell base plate and/or wherein the robotic arm further includes a distal end with an end effector apparatus disposed thereon, the end effector apparatus configured for interacting with the target object.

6. The robotic system of any one of claims 1 to 4, wherein the conveyor system is mounted to the cell base plate and is extendable beyond an edge of the cell base plate, the conveyor system further including a dynamic platform for movement of the target object received from the robotic arm;
and/or
wherein the unit enclosure further includes:
a frame surrounding the transfer unit cell, the frame including vertical posts extending substantially perpendicularly from the cell base plate, and
a fence attached to and between each of the vertical posts, such that the fence includes separable portions moveable to expose or cover portions of the transfer unit cell.

7. A transfer unit cell for deployment of a robotic system, the transfer unit cell comprising:
a cell base plate for the transfer of objects, the transfer unit cell being translatable between a deployed configuration configured to receive and secure a pallet, and a retracted configuration wherein the transfer unit cell is retracted into itself;
a robotic arm mount positioned on the cell base plate for attachment of a robotic arm;
a conveyor system positioned on the cell base plate and adjacent the robotic arm mount for receiving a target object;
a sensor mount attached to the cell base plate for receiving a sensor system including a sensor array; and
a unit enclosure mounted to the cell base plate to facilitate transport of the transfer unit cell, and translation of the transfer unit cell between the deployed configuration and the retracted configuration.

8. The transfer unit cell of claim 7, wherein the cell base plate further includes base extensions extending from an edge of the cell base plate and forming a container placement area between the base extensions, the base extensions configured to provide stability and/or balance to support the transfer unit cell during operation and motion of the robotic arm while in the deployed configuration.

9. The transfer unit cell of claim 8, wherein the base extensions are detachable from the edge of the cell base plate to reduce a footprint of the transfer unit cell while in the retracted configuration or wherein the base extensions are hingedly connected to the edge of the cell base plate to permit the base extensions to fold toward the cell base plate to reduce a footprint of the transfer unit cell while in the retracted configuration.

10. The transfer unit cell of any one of claims 7 to 9, wherein the cell base plate further provides anchorless support features including one or more friction-increasing components extending from a bottom surface of the cell base plate;
or
wherein the conveyor system is mounted to the cell base plate and is extendable beyond an edge of the cell base plate, the conveyor system further including a dynamic platform for movement of the target object received from the robotic arm.

11. The transfer unit cell of any one of claims 7 to 10, wherein the sensor array includes any combination of two-dimensional cameras, three-dimensional cameras, scanners, and/or lighting arrays.

12. The transfer unit cell of any one of claims 7 to 11, wherein the unit enclosure includes a frame surrounding the transfer unit cell, the frame including vertical posts extending perpendicularly from the cell base plate, and the unit enclosure further includes a fence attached to and between each of the vertical posts, such that the fence includes separable portions moveable to expose or cover portions of the transfer unit cell.

13. A method for rapid deployment and integration of a robotic system, comprising:
deploying a transfer unit cell having a cell base plate into a deployed configuration configured to receive and secure a pallet, containing a plurality of objects;
securing the transfer unit cell in the deployed configuration such that the transfer unit cell is stabilized to support the transfer unit cell;
sensing the plurality of objects contained on the pallet via a sensor system including a sensor array attached to a sensor mount of the transfer unit cell;
controlling a robotic arm of the transfer unit cell to interact with a target object sensed from among the plurality of objects contained on the pallet; and
transferring the target object from the pallet to a conveyor system of the transfer unit cell.

14. The method of claim 13, further comprising:
loading the transfer unit cell having a cell base plate onto a transport vehicle in a transport configuration; and
deploying the transfer unit cell into the deployed configuration.

15. The method of claim 13, further comprising:
retracting the transfer unit cell into a retracted configuration wherein the transfer unit cell is retracted into itself;
translating the transfer unit cell from the retracted configuration into a transport configuration; and
moving the transfer unit cell via a transport vehicle.
